# EUROPEAN PATENT APPLICATION

(11) **EP 4 369 769 A1**
(43) Date of publication of application: **15.05.2024**
(21) Application number: 22851855.1
(22) Date of filing: 15.07.2022
(51) Int. Cl.: H04W 24/08, H04L 27/00, H04W 72/12, H04L 5/00

(54) **COMMUNICATION METHOD AND APPARATUS**

(30) Priority: 06.08.2021 CN 202110903687; 07.01.2022 CN 202210017904
(71) Applicant: Huawei Technologies Co., Ltd., Longgang Shenzhen, Guangdong 518129 (CN)
(72) Inventor: HAN, Jing, Shenzhen, Guangdong 518129 (CN); ZHANG, Li, Shenzhen, Guangdong 518129 (CN); LI, Hong, Shenzhen, Guangdong 518129 (CN); SHEN, Zhongyi, Shenzhen, Guangdong 518129 (CN)
(74) Representative: Körber, Martin Hans
(86) International application number: PCT/CN2022/105918
(87) International publication number: WO 2023/011141

(57) **Abstract**

This application provides a communication method and a communication apparatus. The method includes: receiving first configuration information from an access network device, where the first configuration information is used to determine a first time domain resource for measuring a first target carrier. When there is a scheduling limitation on a first serving carrier or receiving and sending cannot be performed on the first serving carrier and the first target carrier at the same time, a terminal device does not expect to perform transmission on the first serving carrier within reference signal measurement time configuration window duration on the first time domain resource, or the terminal device does not expect to perform transmission on the first serving carrier on symbols on which a measurement reference signal on the first time domain resource is located, and on a symbol previous to and a symbol next to contiguous symbols on which the measurement reference signal is located. The first target carrier and the first serving carrier belong to different bands. In this application, the scheduling limitation during measurement is defined, so as to avoid a case in which the access network device schedules the terminal device at a moment at which the terminal device performs downlink measurement and cannot be scheduled, thereby improving communication reliability.

## Description

This application claims priority to Chinese Patent Application No. 202110903687.X, filed with the China National Intellectual Property Administration on August 06, 2021 and entitled "COMMUNICATION METHOD AND COMMUNICATION APPARATUS", and claims priority to Chinese Patent Application No. 202210017904.X, filed with the China National Intellectual Property Administration on January 07, 2022 and entitled "COMMUNICATION METHOD AND COMMUNICATION APPARATUS", which are incorporated herein by reference in their entireties.

### TECHNICAL FIELD

This application relates to the field of communication technologies, and in particular, to a communication method and a communication apparatus.

### BACKGROUND

A terminal device (user equipment, UE) that supports communication in a new radio (new radio, NR) standard usually needs to perform frequency measurement on a serving carrier and a carrier other than the serving carrier, so as to detect a channel quality change in time, and take a corresponding response measure. For example, when signal quality of a current serving cell is relatively poor, if the UE needs to be handed over to another neighboring cell with relatively good signal quality in time, the UE needs to perform frequency measurement before being handed over from a base station corresponding to the current serving cell to a base station corresponding to the neighboring cell, so as to perform handover based on a frequency measurement result. The serving carrier is a carrier on which the serving cell currently accessed by the UE is located, and the carrier other than the serving carrier is usually a carrier adjacent to the serving carrier (which is described as a target carrier below), for example, a carrier on which the neighboring cell is located.

Measurement of the UE is classified into measurement with a gap gap and gap-free measurement based on different capabilities of the UE. Measurement of the UE is classified into intra-frequency measurement and inter-frequency measurement based on different center frequencies of the serving carrier and the target carrier. Measurement with a gap means that the UE uses a dedicated period of time to perform frequency measurement, and this period of time is referred to as a measurement gap (measurement gap, MG). Generally, the MG is configured by an access network device and indicated to the UE. In the MG, the UE can only receive a corresponding to-be-measured measurement reference signal, but cannot perform data receiving and sending. To be specific, in the MG, the data receiving and sending of the UE are interrupted, and the UE can transmit data only after the MG ends. In some gap-free measurements, the UE can simultaneously receive the to-be-measured measurement reference signal and normally receive and send data during measurement. For example, one measurement solution is that the UE actively reports that the MG does not need to be configured, that is, a need for gap solution, and the other measurement solution is that the access network device configures a network controlled small gap (network controlled small gap, NCSG) for the UE, that is, an NCSG solution.

In other words, limited by a processing capability of the UE, the access network device usually needs to perform scheduling limitation (or referred to as scheduling feasibility). To be specific, the network device avoids scheduling the UE on time domain resources on which the UE abandons data receiving and sending. Otherwise, a waste of network resources is caused. However, for the foregoing need for gap solution and NCSG solution, a current standard protocol does not define how to perform scheduling limitation.

### SUMMARY

This application provides a communication method and a communication apparatus, to improve communication reliability.

According to a first aspect, this application provides a communication method, and the method is applicable to a terminal device. The method includes: receiving first configuration information from an access network device, where the first configuration information is used to determine a first time domain resource used by the terminal device to measure a first target carrier; and when there is a scheduling limitation on a first serving carrier or receiving and sending cannot be performed on the first serving carrier and the first target carrier at the same time, skipping, by the terminal device, expecting to perform transmission on the first serving carrier within reference signal measurement time configuration window duration on the first time domain resource; or
when there is a scheduling limitation on a first serving carrier or receiving and sending cannot be performed on the first serving carrier and the first target carrier at the same time, skipping, by the terminal device, expecting to perform transmission on the first serving carrier on symbols on which a measurement reference signal on the first time domain resource is located, and on a symbol previous to and a symbol next to contiguous symbols on which the measurement reference signal is located, where
the first target carrier and the first serving carrier belong to different bands.

In this application, when the first target carrier and the first serving carrier belong to different bands, if there is a scheduling limitation on the first serving carrier, the terminal device does not expect to perform transmission on the first serving carrier within the reference signal measurement time configuration window duration on the first time domain resource, or the terminal device does not expect to perform transmission on the first serving carrier on symbols on which a measurement reference signal on the first time domain resource is located, and on a symbol previous to and a symbol next to contiguous symbols on which the measurement reference signal is located. In this application, the scheduling limitation during measurement is defined, so as to avoid a case in which the access network device schedules the terminal device at a moment at which the terminal device performs downlink measurement and cannot be scheduled, thereby improving communication reliability.

In a possible implementation, the first time domain resource is the reference signal measurement time configuration window duration; or the first time domain resource is a measurement length ML.

It should be noted that, in the need for gap solution, the first time domain resource may be the reference signal measurement time configuration window duration, and in the NCSG solution, the first time domain resource may be the ML. In this application, scheduling limitations during measurement in the two solutions are defined, so that communication reliability can be improved.

In a possible implementation, the method further includes:
sending first information to the access network device, where the first information indicates that there is a scheduling limitation on the first serving carrier; or indicates that receiving and sending cannot be performed on the first serving carrier and the first target carrier at the same time.

In this application, the terminal device actively reports the first information to the access network device. If the access network device may determine, based on the first information, that there is a scheduling limitation on the first serving carrier, the access network device may avoid scheduling the terminal device at a moment at which the terminal device performs downlink measurement, to help improve communication reliability and a system throughput, thereby avoiding a waste of resources.

In a possible implementation, the first information includes at least one carrier pair on which there is a scheduling limitation or receiving and sending cannot be performed on the first serving carrier and the first target carrier at the same time, where one carrier pair includes one first carrier and one second carrier, and the first target carrier and the first serving carrier are included in one of the at least one carrier pair.

In this application, the terminal device reports, to the access network device based on a carrier granularity level, a carrier pair on which there is a scheduling limitation, so that the access network device can determine, based on the carrier pair included in the received first information, whether there is a scheduling limitation on the first target carrier, and applicability is high.

In a possible implementation, the first information includes at least one carrier pair on which there is no scheduling limitation or receiving and sending can be performed on the first serving carrier and the first target carrier at the same time, where one carrier pair includes one first carrier and one second carrier, and the first target carrier and the first serving carrier are not included in any of the at least one carrier pair.

In this application, the terminal device reports, to the access network device based on a carrier granularity level, a carrier pair on which there is no scheduling limitation, so that the access network device can determine, based on the carrier pair included in the received first information, whether there is a scheduling limitation on the first target carrier, and applicability is high.

In a possible implementation, the first information includes at least one band pair on which there is a scheduling limitation or receiving and sending cannot be performed on the first serving carrier and the first target carrier at the same time, where one band pair includes one first band and one second band, and a band on which the first target carrier is located and a band on which the first serving carrier is located are included in one of the at least one band pair.

In this application, the terminal device reports, to the access network device based on a band granularity level, a band pair on which there is a scheduling limitation, so that the access network device can determine, based on the band pair included in the received first information, whether there is a scheduling limitation on the band on which the first target carrier is located. Compared with reporting a carrier pair, a granularity is coarser, reported information is simpler, and applicability is higher.

In a possible implementation, the first information includes at least one band pair on which there is no scheduling limitation, one band pair includes one first band and one second band, and a band on which the first target carrier is located and a band on which the first serving carrier is located are not included in any of the at least one band pair.

In this application, the terminal device reports, to the access network device based on a band granularity level, a band pair on which there is a scheduling limitation, so that the access network device can determine, based on the band pair included in the received first information, whether there is a scheduling limitation on the band on which the first target carrier is located. Compared with reporting a carrier pair, a granularity is coarser, reported information is simpler, and applicability is higher.

In a possible implementation, a type of the first band and a type of the second band are respectively a frequency division duplex band and a time division duplex band; or
a type of the first band and a type of the second band are respectively a time division duplex band and a frequency division duplex band; or
the first band and the second band are different time division duplex bands.

In a possible implementation, the first information includes at least one band type pair on which there is a scheduling limitation or receiving and sending cannot be performed on the first serving carrier and the first target carrier at the same time, one band type pair includes one first band type and one second band type, and a type of a band to which the first target carrier belongs and a type of a band to which the first serving carrier belongs are included in one of the at least one band type pair.

In this application, the terminal device reports, to the access network device based on a band type granularity level, a band type pair on which there is a scheduling limitation, so that the access network device can determine, based on the band type pair included in the received first information, whether there is a scheduling limitation on the band type of the band on which the first target carrier is located. Compared with reporting a carrier pair or a band pair, a granularity is coarser, reported information is simpler, and applicability is higher.

In a possible implementation, the first information includes a resource combination on which there is a scheduling limitation; or the first information includes a resource combination on which receiving and sending cannot be performed on the first serving carrier and the first target carrier at the same time, where
the resource combination includes a first carrier and a second band, the first carrier includes the first serving carrier, and the second band includes a band on which the first target carrier is located.

In a possible implementation, the first information includes a resource combination on which there is a scheduling limitation; or the first information includes a resource combination on which receiving and sending cannot be performed on the first serving carrier and the first target carrier at the same time, where
the resource combination includes cell identity information and a second band, the cell identity information includes identity information of a first serving cell, the second band includes a band on which the first target carrier is located, and a carrier on which the first serving cell is located is the first serving carrier.

In a possible implementation, the first information includes a resource combination on which there is no scheduling limitation; or the first information includes a resource combination on which receiving and sending can be performed on the first serving carrier and the first target carrier at the same time, where
the resource combination includes a first carrier and a second band, the first carrier does not include the first serving carrier, and the second band does not include a band on which the first target carrier is located.

In a possible implementation, the first information includes a resource combination on which there is no scheduling limitation; or the first information includes a resource combination on which receiving and sending can be performed on the first serving carrier and the first target carrier at the same time, where
the resource combination includes cell identity information and a second band, the cell identity information does not include identity information of a first serving cell, the second band does not include a band on which the first target carrier is located, and a carrier on which the first serving cell is located is the first serving carrier.

In a possible implementation, the first information includes a resource combination on which there is a scheduling limitation; or the first information includes a resource combination on which receiving and sending cannot be performed on the first serving carrier and the first target carrier at the same time, where
the resource combination includes cell identity information and a second carrier, the cell identity information includes identity information of a first serving cell, the second carrier includes the first target carrier, and a carrier on which the first serving cell is located is the first serving carrier.

In a possible implementation, the first information includes a resource combination on which there is no scheduling limitation; or the first information includes a resource combination on which receiving and sending can be performed on the first serving carrier and the first target carrier at the same time, where
the resource combination includes cell identity information and a second carrier, the cell identity information does not include identity information of a first serving cell, the second carrier does not include the first target carrier, and a carrier on which the first serving cell is located is the first serving carrier.

In a possible implementation, the method further includes:
if a type of a band to which the first target carrier belongs is a first band type, and a type of a band to which the first serving carrier belongs is a second band type, determining that there is a scheduling limitation on the first serving carrier or that receiving and sending cannot be performed on the first serving carrier and the first target carrier at the same time.

In this application, the terminal device may alternatively not need to report the first information to enable the access network device to determine whether there is a scheduling limitation. Instead, a band type combination on which there is a scheduling limitation is predefined in a standard protocol from the perspective of a band type. Therefore, the access network device may determine, based on the standard protocol, whether there is a specific scheduling limitation on the first serving carrier.

According to a second aspect, this application provides a communication method, where the method is applicable to an access network device. The method includes: sending first configuration information to a terminal device, where the first configuration information is used to determine a first time domain resource used by the terminal device to measure a first target carrier; and when there is a scheduling limitation on a first serving carrier or receiving and sending cannot be performed on the first serving carrier and the first target carrier at the same time, skipping scheduling the terminal device on the first serving carrier within reference signal measurement time configuration window duration on the first time domain resource; or
when there is a scheduling limitation on a first serving carrier or receiving and sending cannot be performed on the first serving carrier and the first target carrier at the same time, skipping scheduling the terminal device on the first serving carrier on symbols on which a measurement reference signal on the first time domain resource is located, and on a symbol previous to and a symbol next to contiguous symbols on which the measurement reference signal is located, where
the first target carrier and the first serving carrier belong to different bands.

In a possible implementation, the first time domain resource is the reference signal measurement time configuration window duration, or the first time domain resource is a measurement length ML.

In a possible implementation, the method further includes:
sending first information to the access network device, where the first information indicates that there is a scheduling limitation on the first serving carrier; or indicates that receiving and sending cannot be performed on the first serving carrier and the first target carrier at the same time.

In a possible implementation, the first information includes at least one carrier pair on which there is a scheduling limitation or receiving and sending cannot be performed on the first serving carrier and the first target carrier at the same time, where one carrier pair includes one first carrier and one second carrier, and the first target carrier and the first serving carrier are included in one of the at least one carrier pair.

In a possible implementation, the first information includes at least one carrier pair on which there is no scheduling limitation or receiving and sending can be performed on the first serving carrier and the first target carrier at the same time, where one carrier pair includes one first carrier and one second carrier, and the first target carrier and the first serving carrier are not included in any of the at least one carrier pair.

In a possible implementation, the first information includes at least one band pair on which there is a scheduling limitation or receiving and sending cannot be performed on the first serving carrier and the first target carrier at the same time, where one band pair includes one first band and one second band, and a band on which the first target carrier is located and a band on which the first serving carrier is located are included in one of the at least one band pair.

In a possible implementation, the first information includes at least one band pair on which there is no scheduling limitation, one band pair includes one first band and one second band, and a band on which the first target carrier is located and a band on which the first serving carrier is located are not included in any of the at least one band pair.

In a possible implementation, a type of the first band and a type of the second band are respectively a frequency division duplex band and a time division duplex band; or
a type of the first band and a type of the second band are respectively a time division duplex band and a frequency division duplex band; or
the first band and the second band are different time division duplex bands.

In a possible implementation, the first information includes at least one band type pair on which there is a scheduling limitation or receiving and sending cannot be performed on the first serving carrier and the first target carrier at the same time, one band type pair includes one first band type and one second band type, and a type of a band to which the first target carrier belongs and a type of a band to which the first serving carrier belongs are included in one of the at least one band type pair.

In a possible implementation, the first information includes a resource combination on which there is a scheduling limitation; or the first information includes a resource combination on which receiving and sending cannot be performed on the first serving carrier and the first target carrier at the same time, where
the resource combination includes a first carrier and a second band, the first carrier includes the first serving carrier, and the second band includes a band on which the first target carrier is located.

In a possible implementation, the first information includes a resource combination on which there is a scheduling limitation; or the first information includes a resource combination on which receiving and sending cannot be performed on the first serving carrier and the first target carrier at the same time, where
the resource combination includes cell identity information and a second band, the cell identity information includes identity information of a first serving cell, the second band includes a band on which the first target carrier is located, and a carrier on which the first serving cell is located is the first serving carrier.

In a possible implementation, the first information includes a resource combination on which there is no scheduling limitation; or the first information includes a resource combination on which receiving and sending can be performed on the first serving carrier and the first target carrier at the same time, where
the resource combination includes a first carrier and a second band, the first carrier does not include the first serving carrier, and the second band does not include a band on which the first target carrier is located.

In a possible implementation, the first information includes a resource combination on which there is no scheduling limitation; or the first information includes a resource combination on which receiving and sending can be performed on the first serving carrier and the first target carrier at the same time, where
the resource combination includes cell identity information and a second band, the cell identity information does not include identity information of a first serving cell, the second band does not include a band on which the first target carrier is located, and a carrier on which the first serving cell is located is the first serving carrier.

In a possible implementation, the first information includes a resource combination on which there is a scheduling limitation; or the first information includes a resource combination on which receiving and sending cannot be performed on the first serving carrier and the first target carrier at the same time, where
the resource combination includes cell identity information and a second carrier, the cell identity information includes identity information of a first serving cell, the second carrier includes the first target carrier, and a carrier on which the first serving cell is located is the first serving carrier.

In a possible implementation, the first information includes a resource combination on which there is no scheduling limitation; or the first information includes a resource combination on which receiving and sending can be performed on the first serving carrier and the first target carrier at the same time, where
the resource combination includes cell identity information and a second carrier, the cell identity information does not include identity information of a first serving cell, the second carrier does not include the first target carrier, and a carrier on which the first serving cell is located is the first serving carrier.

In a possible implementation, the method further includes:
if a type of a band to which the first target carrier belongs is a first band type, and a type of a band to which the first serving carrier belongs is a second band type, determining that there is a scheduling limitation on the first serving carrier or that receiving and sending cannot be performed on the first serving carrier and the first target carrier at the same time.

According to a third aspect, this application provides a communication method, where the method is applicable to a terminal device. The method includes: receiving first configuration information from an access network device, where the first configuration information is used to determine a first time domain resource used by the terminal device to measure a first target carrier, the first time domain resource is reference signal measurement time configuration window duration, or the first time domain resource is a measurement length ML; and
when there is a scheduling limitation on a first serving carrier or receiving and sending cannot be performed on the first serving carrier and the first target carrier at the same time, skipping, by the terminal device, expecting to perform transmission on the first serving carrier within the reference signal measurement time configuration window duration on the first time domain resource; or
when there is a scheduling limitation on a first serving carrier or receiving and sending cannot be performed on the first serving carrier and the first target carrier at the same time, skipping, by the terminal device, expecting to perform transmission on the first serving carrier on symbols on which a measurement reference signal on the first time domain resource is located, and on a symbol previous to and a symbol next to contiguous symbols on which the measurement reference signal is located, where the first target carrier and the first serving carrier belong to a same time division duplex band.

In this application, when the first target carrier and the first serving carrier belong to a same time division duplex band, if there is a scheduling limitation on the first serving carrier, that is, receiving of the to-be-measured measurement reference signal and normal receiving and sending of data cannot be performed at the same time during measurement, the terminal device does not expect to perform transmission on the first serving carrier within the reference signal measurement time configuration window duration on the first time domain resource, or the terminal device does not expect to perform transmission on the first serving carrier on the symbols on which the measurement reference signal on the first time domain resource is located, and on the symbol previous to and the symbol next to the contiguous symbols on which the measurement reference signal is located. In this application, the scheduling limitation during measurement is defined, so as to avoid a case in which the access network device schedules the terminal device at a moment at which the terminal device performs downlink measurement and cannot be scheduled, thereby improving communication reliability.

In a possible implementation, the time division duplex band includes an intra-frequency time division duplex band and/or an inter-frequency time division duplex band.

According to a fourth aspect, this application provides a communication method, where the method is applicable to an access network device. The method includes: sending first configuration information to a terminal device, where the first configuration information is used to determine a first time domain resource used by the terminal device to measure a first target carrier, the first time domain resource is reference signal measurement time configuration window duration, or the first time domain resource is a measurement length ML; and
when there is a scheduling limitation on a first serving carrier or receiving and sending cannot be performed on the first serving carrier and the first target carrier at the same time, skipping scheduling the terminal device on the first serving carrier within the reference signal measurement time configuration window duration on the first time domain resource; or
when there is a scheduling limitation on a first serving carrier or receiving and sending cannot be performed on the first serving carrier and the first target carrier at the same time, skipping scheduling the terminal device on the first serving carrier on symbols on which a measurement reference signal on the first time domain resource is located, and on a symbol previous to and a symbol next to contiguous symbols on which the measurement reference signal is located, where
the first target carrier and the first serving carrier belong to a same time division duplex band.

In a possible implementation, the time division duplex band includes an intra-frequency time division duplex band and/or an inter-frequency time division duplex band.

According to a fifth aspect, this application provides a communication apparatus, where the apparatus may be a terminal device. The apparatus includes:
a transceiver unit, configured to receive first configuration information from an access network device, where the first configuration information is used to determine a first time domain resource used by the terminal device to measure a first target carrier, where
when there is a scheduling limitation on a first serving carrier or receiving and sending cannot be performed on the first serving carrier and the first target carrier at the same time, the terminal device does not expect to perform transmission on the first serving carrier within reference signal measurement time configuration window duration on the first time domain resource; or
when there is a scheduling limitation on a first serving carrier or receiving and sending cannot be performed on the first serving carrier and the first target carrier at the same time, the terminal device does not expect to perform transmission on the first serving carrier on symbols on which a measurement reference signal on the first time domain resource is located, and on a symbol previous to and a symbol next to contiguous symbols on which the measurement reference signal is located, where
the first target carrier and the first serving carrier belong to different bands.

In a possible implementation, the first time domain resource is the reference signal measurement time configuration window duration; or the first time domain resource is a measurement length ML.

In a possible implementation, the transceiver unit is further configured to send first information to the access network device, where the first information indicates that there is a scheduling limitation on the first serving carrier; or indicates that receiving and sending cannot be performed on the first serving carrier and the first target carrier at the same time.

In a possible implementation, the first information includes at least one carrier pair on which there is a scheduling limitation or receiving and sending cannot be performed on the first serving carrier and the first target carrier at the same time, where one carrier pair includes one first carrier and one second carrier, and the first target carrier and the first serving carrier are included in one of the at least one carrier pair.

In a possible implementation, the first information includes at least one carrier pair on which there is no scheduling limitation or receiving and sending can be performed on the first serving carrier and the first target carrier at the same time, where one carrier pair includes one first carrier and one second carrier, and the first target carrier and the first serving carrier are not included in any of the at least one carrier pair.

In a possible implementation, the first information includes at least one band pair on which there is a scheduling limitation or receiving and sending cannot be performed on the first serving carrier and the first target carrier at the same time, where one band pair includes one first band and one second band, and a band on which the first target carrier is located and a band on which the first serving carrier is located are included in one of the at least one band pair.

In a possible implementation, the first information includes at least one band pair on which there is no scheduling limitation, one band pair includes one first band and one second band, and a band on which the first target carrier is located and a band on which the first serving carrier is located are not included in any of the at least one band pair.

In a possible implementation, a type of the first band and a type of the second band are respectively a frequency division duplex band and a time division duplex band; or
a type of the first band and a type of the second band are respectively a time division duplex band and a frequency division duplex band; or
the first band and the second band are different time division duplex bands.

In a possible implementation, the first information includes at least one band type pair on which there is a scheduling limitation or receiving and sending cannot be performed on the first serving carrier and the first target carrier at the same time, one band type pair includes one first band type and one second band type, and a type of a band to which the first target carrier belongs and a type of a band to which the first serving carrier belongs are included in one of the at least one band type pair.

In a possible implementation, the first information includes a resource combination on which there is a scheduling limitation; or the first information includes a resource combination on which receiving and sending cannot be performed on the first serving carrier and the first target carrier at the same time; and
the resource combination includes a first carrier and a second band, the first carrier includes the first serving carrier, and the second band includes a band on which the first target carrier is located.

In a possible implementation, the first information includes a resource combination on which there is a scheduling limitation; or the first information includes a resource combination on which receiving and sending cannot be performed on the first serving carrier and the first target carrier at the same time; and
the resource combination includes cell identity information and a second band, the cell identity information includes identity information of a first serving cell, the second band includes a band on which the first target carrier is located, and a carrier on which the first serving cell is located is the first serving carrier.

In a possible implementation, the first information includes a resource combination on which there is no scheduling limitation; or the first information includes a resource combination on which receiving and sending can be performed on the first serving carrier and the first target carrier at the same time; and
the resource combination includes a first carrier and a second band, the first carrier does not include the first serving carrier, and the second band does not include a band on which the first target carrier is located.

In a possible implementation, the first information includes a resource combination on which there is no scheduling limitation; or the first information includes a resource combination on which receiving and sending can be performed on the first serving carrier and the first target carrier at the same time; and
the resource combination includes cell identity information and a second band, the cell identity information does not include identity information of a first serving cell, the second band does not include a band on which the first target carrier is located, and a carrier on which the first serving cell is located is the first serving carrier.

In a possible implementation, the first information includes a resource combination on which there is a scheduling limitation; or the first information includes a resource combination on which receiving and sending cannot be performed on the first serving carrier and the first target carrier at the same time; and
the resource combination includes cell identity information and a second carrier, the cell identity information includes identity information of a first serving cell, the second carrier includes the first target carrier, and a carrier on which the first serving cell is located is the first serving carrier.

In a possible implementation, the first information includes a resource combination on which there is no scheduling limitation; or the first information includes a resource combination on which receiving and sending can be performed on the first serving carrier and the first target carrier at the same time; and
the resource combination includes cell identity information and a second carrier, the cell identity information does not include identity information of a first serving cell, the second carrier does not include the first target carrier, and a carrier on which the first serving cell is located is the first serving carrier.

In a possible implementation, the apparatus further includes:
a processing unit, configured to: if it is determined that a type of a band to which the first target carrier belongs is a first band type, and a type of a band to which the first serving carrier belongs is a second band type, determine that there is a scheduling limitation on the first serving carrier or that receiving and sending cannot be performed on the first serving carrier and the first target carrier at the same time.

According to a sixth aspect, this application provides a communication apparatus, where the apparatus may be an access network device. The apparatus includes:
a transceiver unit, configured to send first configuration information to a terminal device, where the first configuration information is used to determine a first time domain resource used by the terminal device to measure a first target carrier; and
a processing unit, configured to: when there is a scheduling limitation on a first serving carrier or receiving and sending cannot be performed on the first serving carrier and the first target carrier at the same time, skip scheduling the terminal device on the first serving carrier within reference signal measurement time configuration window duration on the first time domain resource; or
the processing unit is configured to: when there is a scheduling limitation on the first serving carrier or receiving and sending cannot be performed on the first serving carrier and the first target carrier at the same time, skip scheduling the terminal device on the first serving carrier on symbols on which a measurement reference signal on the first time domain resource is located, and on a symbol previous to and a symbol next to contiguous symbols on which the measurement reference signal is located, where
the first target carrier and the first serving carrier belong to different bands.

In a possible implementation, the first time domain resource is the reference signal measurement time configuration window duration, or the first time domain resource is a measurement length ML.

In a possible implementation, the transceiver unit is further configured to send first information to the access network device, where the first information indicates that there is a scheduling limitation on the first serving carrier; or indicates that receiving and sending cannot be performed on the first serving carrier and the first target carrier at the same time.

In a possible implementation, the first information includes at least one carrier pair on which there is a scheduling limitation or receiving and sending cannot be performed on the first serving carrier and the first target carrier at the same time, where one carrier pair includes one first carrier and one second carrier, and the first target carrier and the first serving carrier are included in one of the at least one carrier pair.

In a possible implementation, the first information includes at least one carrier pair on which there is no scheduling limitation or receiving and sending can be performed on the first serving carrier and the first target carrier at the same time, where one carrier pair includes one first carrier and one second carrier, and the first target carrier and the first serving carrier are not included in any of the at least one carrier pair.

In a possible implementation, the first information includes at least one band pair on which there is a scheduling limitation or receiving and sending cannot be performed on the first serving carrier and the first target carrier at the same time, where one band pair includes one first band and one second band, and a band on which the first target carrier is located and a band on which the first serving carrier is located are included in one of the at least one band pair.

In a possible implementation, the first information includes at least one band pair on which there is no scheduling limitation, one band pair includes one first band and one second band, and a band on which the first target carrier is located and a band on which the first serving carrier is located are not included in any of the at least one band pair.

In a possible implementation, a type of the first band and a type of the second band are respectively a frequency division duplex band and a time division duplex band; or
a type of the first band and a type of the second band are respectively a time division duplex band and a frequency division duplex band; or
the first band and the second band are different time division duplex bands.

In a possible implementation, the first information includes at least one band type pair on which there is a scheduling limitation or receiving and sending cannot be performed on the first serving carrier and the first target carrier at the same time, one band type pair includes one first band type and one second band type, and a type of a band to which the first target carrier belongs and a type of a band to which the first serving carrier belongs are included in one of the at least one band type pair.

In a possible implementation, the first information includes a resource combination on which there is a scheduling limitation; or the first information includes a resource combination on which receiving and sending cannot be performed on the first serving carrier and the first target carrier at the same time; and
the resource combination includes a first carrier and a second band, the first carrier includes the first serving carrier, and the second band includes a band on which the first target carrier is located.

In a possible implementation, the first information includes a resource combination on which there is a scheduling limitation; or the first information includes a resource combination on which receiving and sending cannot be performed on the first serving carrier and the first target carrier at the same time; and
the resource combination includes cell identity information and a second band, the cell identity information includes identity information of a first serving cell, the second band includes a band on which the first target carrier is located, and a carrier on which the first serving cell is located is the first serving carrier.

In a possible implementation, the first information includes a resource combination on which there is no scheduling limitation; or the first information includes a resource combination on which receiving and sending can be performed on the first serving carrier and the first target carrier at the same time; and
the resource combination includes a first carrier and a second band, the first carrier does not include the first serving carrier, and the second band does not include a band on which the first target carrier is located.

In a possible implementation, the first information includes a resource combination on which there is no scheduling limitation; or the first information includes a resource combination on which receiving and sending can be performed on the first serving carrier and the first target carrier at the same time; and
the resource combination includes cell identity information and a second band, the cell identity information does not include identity information of a first serving cell, the second band does not include a band on which the first target carrier is located, and a carrier on which the first serving cell is located is the first serving carrier.

In a possible implementation, the first information includes a resource combination on which there is a scheduling limitation; or the first information includes a resource combination on which receiving and sending cannot be performed on the first serving carrier and the first target carrier at the same time; and
the resource combination includes cell identity information and a second carrier, the cell identity information includes identity information of a first serving cell, the second carrier includes the first target carrier, and a carrier on which the first serving cell is located is the first serving carrier.

In a possible implementation, the first information includes a resource combination on which there is no scheduling limitation; or the first information includes a resource combination on which receiving and sending can be performed on the first serving carrier and the first target carrier at the same time; and
the resource combination includes cell identity information and a second carrier, the cell identity information does not include identity information of a first serving cell, the second carrier does not include the first target carrier, and a carrier on which the first serving cell is located is the first serving carrier.

In a possible implementation, the processing unit is further configured to: if it is determined that a type of a band to which the first target carrier belongs is a first band type, and a type of a band to which the first serving carrier belongs is a second band type, determine that there is a scheduling limitation on the first serving carrier or that receiving and sending cannot be performed on the first serving carrier and the first target carrier at the same time.

According to a seventh aspect, this application provides a communication apparatus, where the apparatus may be a terminal device. The apparatus includes:
a transceiver unit, configured to receiving first configuration information from an access network device, where the first configuration information is used to determine a first time domain resource used by the terminal device to measure a first target carrier, the first time domain resource is reference signal measurement time configuration window duration, or the first time domain resource is a measurement length ML, where
when there is a scheduling limitation on a first serving carrier or receiving and sending cannot be performed on the first serving carrier and the first target carrier at the same time, the terminal device does not expect to perform transmission on the first serving carrier within the reference signal measurement time configuration window duration on the first time domain resource; or
when there is a scheduling limitation on a first serving carrier or receiving and sending cannot be performed on the first serving carrier and the first target carrier at the same time, the terminal device does not expect to perform transmission on the first serving carrier on symbols on which a measurement reference signal on the first time domain resource is located, and on a symbol previous to and a symbol next to contiguous symbols on which the measurement reference signal is located, where
the first target carrier and the first serving carrier belong to a same time division duplex band.

In a possible implementation, the time division duplex band includes an intra-frequency time division duplex band and/or an inter-frequency time division duplex band.

According to an eighth aspect, this application provides a communication apparatus, where the apparatus may be an access network device. The apparatus includes:
a transceiver unit, configured to send first configuration information to a terminal device, where the first configuration information is used to determine a first time domain resource used by the terminal device to measure a first target carrier, the first time domain resource is reference signal measurement time configuration window duration, or the first time domain resource is a measurement length ML; and
a processing unit, configured to: when there is a scheduling limitation on a first serving carrier or receiving and sending cannot be performed on the first serving carrier and the first target carrier at the same time, skip scheduling the terminal device on the first serving carrier within the reference signal measurement time configuration window duration on the first time domain resource; or
the processing unit is configured to: when there is a scheduling limitation on the first serving carrier or receiving and sending cannot be performed on the first serving carrier and the first target carrier at the same time, skip scheduling the terminal device on the first serving carrier on symbols on which a measurement reference signal on the first time domain resource is located, and on a symbol previous to and a symbol next to contiguous symbols on which the measurement reference signal is located, where
the first target carrier and the first serving carrier belong to a same time division duplex band.

In a possible implementation, the time division duplex band includes an intra-frequency time division duplex band and/or an inter-frequency time division duplex band.

According to a ninth aspect, this application provides a communication apparatus. The apparatus may be a terminal device, or an apparatus in the terminal device, or an apparatus that can be used together with the terminal device. The communication apparatus may alternatively be a chip system. The communication apparatus may perform the method in the first aspect or the third aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect thereof, refer to the method and beneficial effect in the first aspect or the third aspect. Repeated content is not described again.

According to a tenth aspect, this application provides a communication apparatus. The apparatus may be an access network device, an apparatus in the access network device, or an apparatus that can be used together with the access network device. The communication apparatus may alternatively be a chip system. The communication apparatus may perform the method according to the second aspect or the fourth aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect thereof, refer to the method and beneficial effect in the second aspect or the fourth aspect. Repeated content is not described again.

According to an eleventh aspect, this application provides a communication apparatus. The apparatus may be a terminal device, the communication apparatus includes a processor and a transceiver, and the processor and the transceiver are configured to execute a computer program or instructions stored in at least one memory, so that the apparatus implements the method according to the first aspect or the third aspect.

According to a twelfth aspect, this application provides a communication apparatus. The apparatus may be a terminal device, and the communication apparatus includes a processor, a transceiver, and a memory. The processor, the transceiver, and the memory are coupled to each other. The processor and the transceiver are configured to implement the method according to the first aspect or the third aspect.

According to a thirteenth aspect, this application provides a communication apparatus. The apparatus may be an access network device, the communication apparatus includes a processor and a transceiver, and the processor and the transceiver are configured to execute a computer program or instructions stored in at least one memory, so that the apparatus implements the method according to the second aspect or the fourth aspect.

According to a fourteenth aspect, this application provides a communication apparatus. The apparatus may be an access network device, and the communication apparatus includes a processor, a transceiver, and a memory. The processor, the transceiver, and the memory are coupled to each other, and the processor and the transceiver are configured to implement the method according to the second aspect or the fourth aspect.

According to a fifteenth aspect, this application provides a computer-readable storage medium. The storage medium stores a computer program or instructions, and when the computer program or the instructions are executed by a computer, the method according to any one of the first aspect to the fourth aspect is implemented.

According to a sixteenth aspect, this application provides a computer program product including instructions. The computer program product includes computer program code, and when the computer program code is run on a computer, the method according to any one of the first aspect to the fourth aspect is implemented.

According to a seventeenth aspect, a chip system is provided. The chip system includes a processor, may further include a memory, and is configured to implement the method in any one of the first aspect to the fourth aspect and any possible design. The chip system may include a chip, or may include a chip and another discrete component.

According to an eighteenth aspect, a communication system is provided. The communication system includes the terminal device in the ninth aspect and the access network device in the tenth aspect.

### BRIEF DESCRIPTION OF DRAWINGS

FIG. 1 is a schematic diagram of a structure of a 5G communication system according to an embodiment of this application;
FIG. 2 is a schematic diagram of configuring an NCSG according to an embodiment of this application;
FIG. 3 is a schematic flowchart of a communication method according to an embodiment of this application;
FIG. 4 is a schematic diagram of a symbol previous to and a symbol next to contiguous SSB symbols according to an embodiment of this application;
FIG. 5 is a schematic diagram of a symbol previous to and a symbol next to contiguous SSB symbols according to an embodiment of this application;
FIG. 6 is another schematic flowchart of a communication method according to an embodiment of this application;
FIG. 7 is a schematic diagram of a structure of a communication apparatus according to an embodiment of this application;
FIG. 8 is a schematic diagram of a structure of another communication apparatus according to an embodiment of this application;
FIG. 9 is a schematic diagram of a structure of another communication apparatus according to an embodiment of this application; and
FIG. 10 is a schematic diagram of a structure of another communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may indicate A or B. The term "and/or" in this specification describes only an association relationship between associated objects and indicates that there may be three relationships. For example, A and/or B may indicate the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, the term "example" or "for example" is used to represent giving an example, an illustration, or a description. Any embodiment or design scheme described as an "example" or "for example" in this application should not be explained as being more preferred or having more advantages than another embodiment or design scheme. To be precise, the use of the term such as "example" or "for example" is intended to present a related concept in a specific manner.

The technical solutions in embodiments of this application may be used in various communication systems, such as a global system for mobile communications (global system of mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a fifth-generation (fifth-generation, 5G) system or a new radio (new radio, NR) system, and a future evolved communication system. This is not limited herein.

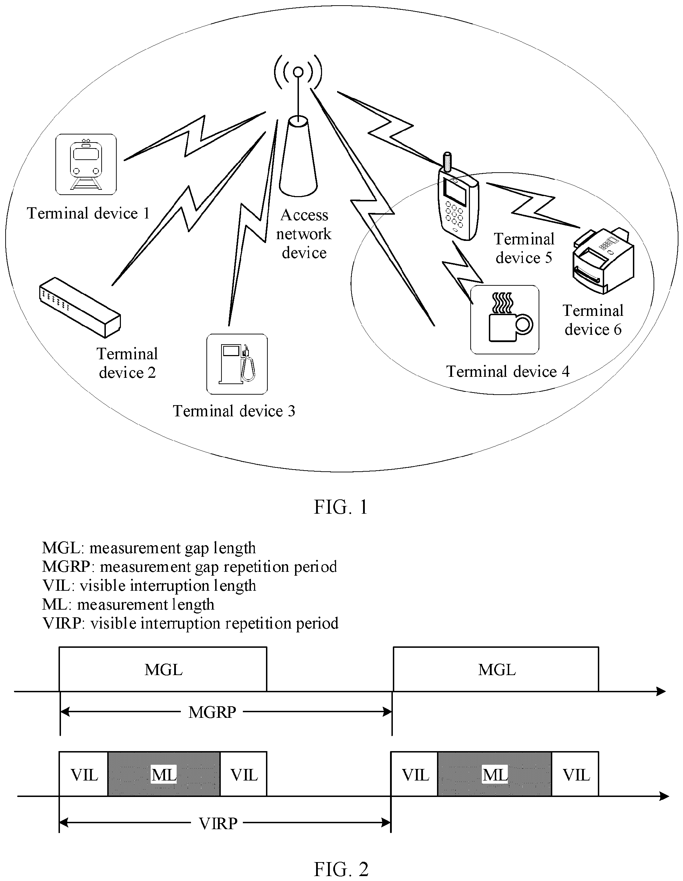

For example, a 5G communication system is used as an example for description in this embodiment of this application. FIG. 1 is a schematic diagram of a structure of a 5G communication system according to an embodiment of this application. As shown in FIG. 1, a communication system includes an access network device and a terminal device 1 to a terminal device 6. In the communication system, the terminal device 1 to the terminal device 6 may send uplink information to the access network device, and the access network device may also send downlink information to the terminal device 1 to the terminal device 6. In addition, the terminal device 4 to the terminal device 6 may also constitute a communication system. In the communication system, the access network device may send downlink information to the terminal device 1, the terminal device 2, the terminal device 5, and the like. The terminal device 5 may also send downlink information to the terminal device 4 and the terminal device 6. The terminal device 4 and the terminal device 6 may also send uplink information to the access network device by using the terminal device 5.

The terminal device in embodiments of this application is a device having a wireless transceiver function. The terminal device may also be referred to as user equipment (user equipment, UE), an access terminal (access terminal), a terminal, a subscriber unit, a subscriber station, a mobile station (mobile station), a mobile console (mobile), a remote station (remote station), a remote terminal (remote terminal), a mobile device, a user terminal (user terminal), a wireless network device, a user agent (user agent), a user apparatus, or the like. The terminal device may be deployed on land, including an indoor or outdoor, a handheld or vehicle-mounted device. The terminal device may also be deployed on water (for example, on a ship). The terminal device may also be deployed in the air (for example, on an airplane, a balloon, or a satellite). The terminal device may be a cellular phone, a cordless phone, a session initiation protocol (session initiation protocol, SIP) phone, a smartphone, a mobile phone, a wireless local loop (wireless local loop, WLL) station, a personal digital assistant (personal digital assistant, PDA), a handheld device having a wireless communication function, a computing device or another device connected to a wireless modem, a vehicle-mounted device, a wearable device, an uncrewed aerial vehicle device or an internet of things, a terminal in an internet of vehicles, a terminal in any form in a 5th generation (5th generation, 5G) network and a future network, relay user equipment, a terminal in a future evolved public land mobile network (public land mobile network, PLMN), or the like. The relay user equipment may be, for example, a 5G residential gateway (residential gateway, RG). For example, the terminal device may be a virtual reality (virtual reality, VR) terminal, an augmented reality (augmented reality, AR) terminal, a wireless terminal in industrial control, a wireless terminal in unmanned driving, a wireless terminal in telemedicine, a wireless terminal in a smart grid (smart grid), a wireless terminal in transportation security, a wireless terminal in a smart city, a wireless terminal in a smart home, or the like. This is not limited in embodiments of this application.

The access network device in embodiments of this application may be a network device that communicates with a terminal device. The access network device includes, for example, but is not limited to, a next-generation NodeB (next-generation NodeB, gNB), an evolved NodeB (evolved NodeB, eNB), a next generation evolved NodeB (next generation eNB, ng-eNB), a wireless backhaul device, a radio network controller (radio network controller, RNC), a NodeB (NodeB, NB), a base station controller (base station controller, BSC), a base transceiver station (base transceiver station, BTS), a home base station ((home evolved NodeB, HeNB) or (home NodeB, HNB)), a baseband unit (baseband unit, BBU), a transmission reception point (transmission reception point, TRP), a transmission point (transmission point, TP), a mobile switching center, and the like in a 5G communication system. This is not limited herein. In addition, the access network device may alternatively be a base station in a 6G communication system, an open base station (Open RAN), a cloud base station (Cloud RAN), or the like. This is not limited herein.

To facilitate understanding of related content in embodiments of this application, the following describes some knowledge required in the solutions in this application. It should be noted that, these explanations are intended to make embodiments of this application easier to understand, but should not be considered as a limitation on the protection scope claimed in this application.

### 1. Band (band), channel bandwidth, bandwidth part (bandwidth part, BWP), and frequency.

A band means a frequency range or a spectrum width, that is, a range from a lowest working frequency to a highest working frequency of a wireless decoder in units of Hz. The band may be divided into a band in a time division duplex (time division duplex, TDD) standard (referred to as a time division duplex band, that is, a TDD band) and a band in a frequency division duplex (frequency division duplex, FDD) standard (referred to as a frequency division duplex band, that is, an FDD band).

The channel bandwidth limits upper and lower limits of frequencies that are allowed to pass through the channel, that is, limits a frequency passband. One band may be divided into several different channel bandwidths. Generally, one channel bandwidth may be configured for one cell, that is, one cell may work in one channel bandwidth, and each channel bandwidth may be further divided into a plurality of BWPs. Further, a maximum of four BWPs may be configured for one UE, but only one BWP is in an activated state at a particular moment. The BWP in the activated state represents an operating bandwidth used by the UE within an operating bandwidth of the cell (that is, a BWP currently used by the UE). Correspondingly, the UE does not receive or send data outside the BWP in the activated state. For ease of description, the BWP in the activated state may be referred to as an activated BWP or an activated bandwidth for short.

A frequency is a point in a band, for example, a frequency of 810 MHz. It should be noted that, the frequency in embodiments of this application may also be described as a carrier. This is not limited herein.

### 2. Intra-frequency measurement (intra-frequency measurement) and inter-frequency measurement (inter-frequency measurement)

Using SSB-based intra-frequency measurement as an example, intra-frequency measurement means that a center frequency of an SSB indicated by a serving cell in which UE is currently located to perform measurement is the same as that of an SSB in a neighboring cell. Inter-frequency measurement means that the center frequency of the SSB of the serving cell in which UE is currently located indicated for measurement is different from that of the SSB in the neighboring cell. In other words, intra-frequency measurement is measurement in which center frequencies of SSBs of a serving carrier and a target carrier are the same, and inter-frequency measurement is measurement in which the center frequencies of the SSBs of the serving carrier and the target carrier are different. The serving carrier is a carrier on which the serving cell is located, and the target carrier is a carrier on which a to-be-measured cell is located. For example, the to-be-measured cell may be a neighboring cell of the serving cell. The target carrier in embodiments of this application may also be described as a measurement object (measurement object, MO), or may be described as a to-be-measured carrier, or the like. This is not limited herein.

Generally, for intra-frequency measurement, the UE may continuously perform measurement because the UE continuously listens to a frequency of the serving cell. However, for inter-frequency measurement, the UE usually cannot perform continuous measurement, but needs to move a receive radio frequency chain from a bandwidth part (bandwidth part, BWP) for current data reception to a carrier frequency (that is, a center frequency) of the to-be-measured cell, causing a data interruption in the serving cell. Based on this, a measurement gap (measurement gap, MG) based solution is provided in the conventional technology, that is, the UE uses a dedicated period of time to perform inter-frequency measurement, and this period of time is referred to as a measurement gap. In the measurement gap (that is, during measurement), the UE does not send or receive any data, but adjusts a receiver toward the carrier frequency of the to-be-measured-cell, to receive a corresponding measurement reference signal. After measurement time ends, the UE switches to the current serving cell to continue sending and receiving data. The measurement reference signal may be a synchronization signal block (synchronization signal block, SSB) used for measurement, that is, an SS/PBCH block, or the like. Alternatively, the measurement reference signal may be a channel state information-reference signal (channel-state information-reference signal, CSI-RS) used for measurement, or the like. This is not limited herein. For example, assuming that a length of the measurement gap is set to 6 ms, it means that data transmission and reception of the UE are interrupted in continuous 6 ms. In this way, the UE can transmit data only after the measurement gap ends.

Generally, the MG is configured by the access network device for the UE, and configuration parameters of the MG include information such as a measurement gap length (measurement gap length, MGL), a measurement gap repetition period (measurement gap repetition period, MGRP), and a time domain location, where the MGL may be understood as an interruption time in the serving cell, the MGRP may be understood as a time interval at which interruption occurs in the serving cell, and the time domain location may be understood as which slots in the serving cell are interrupted.

### 3. Need for gap solution and network controlled small measurement gap (network controlled small gap, NCSG) solution

It should be noted that, when a measurement manner with a gap is used for measurement, during measurement (that is, in the MG), the UE can only perform measurement but cannot perform data receiving and sending. Therefore, to avoid causing interruption to the serving cell during measurement execution, two radio frequency architectures are proposed. In the first radio frequency architecture, when measuring a to-be-measured frequency, the UE may use an additional radio frequency chain, and does not need to switch the radio frequency chain of the serving cell to the to-be-measured frequency, thereby avoiding causing interruption to the serving cell during measurement execution. In the second radio frequency architecture, when the UE measures a to-be-measured frequency, the UE may adjust a bandwidth of a radio frequency chain to a large bandwidth, so as to cover to-be-measured signals of the carrier on which the serving cell is located (namely, the serving carrier) and the target carrier, thereby avoiding causing interruption to the serving cell during measurement execution, that is, the UE can normally receive and send data during measurement.

Two manners or solutions are defined in the standard to implement the foregoing two radio frequency architectures:

### Need for gap solution

The UE reports, in a need for gap capability, signaling that a gap is not required (no gap), so that the access network device does not deliver the configuration parameters of the MG to the UE. Therefore, the UE can normally receive and send data during measurement. Related signaling is defined in Release 16.

### (2) NCSG Solution

Before and after UE measurement, interruption may be caused to the serving cell due to switch-on/off or bandwidth adjustment of the additional radio frequency chain. Therefore, to alleviate impact of the interruption on data throughputs, the NCSG solution regulates a length and a location of the interruption. Specifically, in the NCSG solution, the access network device needs to send configuration parameters of the NCSG to the UE. The configuration parameters of the NCSG include information such as a visible interrupt length (visible interruption length, VIL), a visible interrupt repetition period (visible interruption repetition period, VIRP), and a measurement length (measurement length, ML).

For example, FIG. 2 is a schematic diagram of a configuring an NCSG according to an embodiment of this application. As shown in FIG. 2, the first row represents configuration of the MG, and the second row represents configuration of the NCSG. As shown in FIG. 2, the measurement gap repetition period of the MG is the same as the visible interruption repetition period of the NCSG. The purpose of configuring the NCSG for the UE by the access network device is to enable the UE to perform measurement and normally receive and send data during the ML.

### 4. Scheduling limitation

Scheduling limitation means that the terminal device may not perform uplink sending and/or downlink receiving on a specified symbol. To be specific, a network avoids scheduling the UE on symbols on which the UE abandons data receiving and sending, or the network avoids scheduling the UE on symbols on which the UE does not expect, or does not want, or cannot perform data receiving and sending.

### 5. Symbol (symbol)

A symbol, which may also be referred to as a time domain symbol, includes but is not limited to an orthogonal frequency division multiplexing (orthogonal frequency division multiplexing, OFDM) symbol, a sparse code multiplexing access (sparse code multiplexing access, SCMA) symbol, a filtered orthogonal frequency division multiplexing (filtered orthogonal frequency division multiplexing, F-OFDM) symbol, and a non-orthogonal multiple access (non-orthogonal multiple access, NOMA) symbol. This may be specifically determined based on an actual situation, and details are not described herein.

### 6. Slot (slot)

In long term evolution (long term evolution, LTE), one slot occupies six or seven contiguous OFDM symbols or the like in time domain. In NR, one slot occupies 14 contiguous OFDM symbols (normal cyclic prefix) or 12 contiguous OFDM symbols (extended cyclic prefix) or the like in time domain.

It should be noted that, currently, the NR R15 protocol TS38.133 defines scheduling limitations for the following two scenarios:
Scenario 1: Intra-frequency gap-free measurement: An SSB for an MO of intra-frequency measurement completely falls within the activated bandwidth of the UE, or the activated downlink BWP is an initial BWP.
Scenario 2: Inter-frequency gap-free measurement: An SSB for an MO of inter-frequency measurement completely falls within the activated bandwidth of the UE.

The protocol defines three scheduling limitations for the foregoing scenario 1 and scenario 2:
1. The UE performs measurement on a TDD band in a frequency range 1 (frequency range 1, FR 1).
   The protocol stipulates that, when the UE performs intra-frequency gap-free or inter-frequency gap-free measurement on the TDD band in the FR 1, the UE does not expect to send a physical uplink control channel (physical uplink control channel, PUCCH)/physical uplink shared channel (physical uplink shared channel, PUSCH)/sounding reference signal (sounding reference signal, SRS) on SSB symbols and on a symbol previous to and a symbol next to contiguous SSB symbols. The FR 1 may also be referred to as a low frequency.
2. In the FR1, when an SCS of an SSB measured by the UE is different from an SCS of a PDSCH/PDCCH of the serving cell, TS38.133 also regulates a corresponding scheduling limitation.
3. When the UE measures an MO in a frequency range 2 (frequency range 2, FR2), TS38.133 also regulates a corresponding scheduling limitation. The FR 2 may also be referred to as a high frequency.

In other words, limited by a processing capability of the UE, the access network device usually needs to perform scheduling limitation (or referred to as scheduling feasibility). To be specific, the network device avoids scheduling the UE on time domain resources on which the UE abandons data receiving and sending. Otherwise, a waste of network resources is caused. However, a case in which gap-free measurement is performed and an SSB for an MO falls within an activated BWP of the UE is considered in an existing scheduling limitation. However, for need for gap and NCSG measurement in this application, a carrier center frequency (or described as a carrier frequency or a center frequency) of the serving carrier and a carrier center frequency of the target carrier may not be in the activated BWP of the UE, and may be intra-band (that is, a same TDD band, or described as intra-band TDD), or may be inter-band (that is, inter-TDD-TDD bands, TDD-FDD bands, or FDD-TDD bands). However, a current standard protocol does not define how to determine a scheduling limitation in the foregoing need for gap and NCSG measurement manners.

Based on this, embodiments of this application provide a communication method and apparatus. The method can resolve the scheduling limitation problem when the terminal device performs measurement by using the need for gap solution and the NCSG solution. In other words, in embodiments of this application, scheduling limitations are defined in the need for gap solution and the NCSG solution during measurement, so as to avoid a case in which the access network device schedules the terminal device at a moment at which the terminal device performs downlink measurement and cannot be scheduled. This helps improve communication reliability, improve a throughput of a communication system, and avoid a waste of resources.

It should be noted that, in addition to the need for gap solution and the NCSG solution, the method provided in this application may be further applicable to another solution similar to the need for gap solution and the NCSG solution.

The following describes in detail the technical solutions provided in this application with reference to more accompanying drawings.

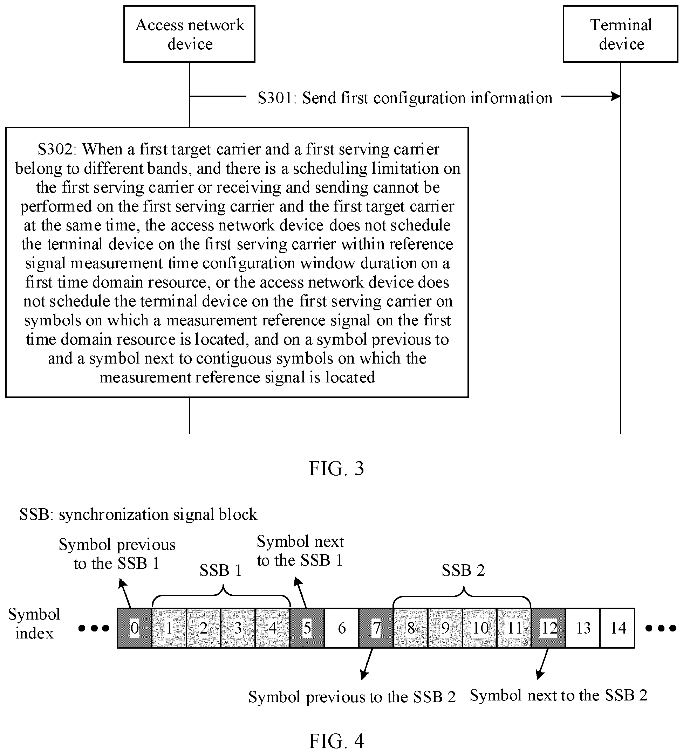

FIG. 3 is a schematic flowchart of a communication method according to an embodiment of this application. As shown in FIG. 3, the method includes the following step S301 and step S302. The method shown in FIG. 3 may be performed by an access network device, or the method shown in FIG. 3 may be performed by a chip in the access network device, or the like. This is not limited herein. For ease of description, the following uses an access network device as an example for description. It should be noted that, this embodiment of this application is applicable to a scenario in which a band on which a serving carrier is located and a band on which a target carrier is located are different bands, namely, an inter-band scenario, in the need for gap solution and the NCSG solution. The inter-band scenario may include the following three scenarios: Scenario 1: A band on which the serving carrier is located is an FDD band, and a band on which the target carrier is located is a TDD band. Scenario 2: A band on which the serving carrier is located is a TDD band, and a band on which the target carrier is located is an FDD band. Scenario 3: Both a band on which the serving carrier is located and a band on which the target carrier is located are TDD bands, but the two TDD bands are not a same TDD band, that is, inter-band TDD.

S301: The access network device sends first configuration information to a terminal device.

In some feasible implementations, the access network device sends the first configuration information to the terminal device. The first configuration information is used to determine a first time domain resource used by the terminal device to measure a first target carrier. In other words, after receiving the first configuration information from the access network device, the terminal device may determine, based on the first configuration information, a time domain resource for measuring the first target carrier, namely, the first time domain resource. The first time domain resource may be reference signal measurement time configuration window duration, or the first time domain resource may be a measurement length (measurement length, ML), or the like. This is not limited herein. It should be noted that, when a measurement reference signal is an SSB used for measurement, the reference signal measurement time configuration window duration may be SSB-based measurement timing configuration (SSB-based measurement timing configuration, SMTC) window duration; or when the measurement reference signal is a CSI-RS used for measurement, the reference signal measurement time configuration window duration may be CSI-RS-based measurement timing configuration window duration. This is not limited herein. For ease of description, in the following embodiments of this application, an example in which the reference signal measurement time configuration window duration is the SMTC window duration is used for description.

It should be noted that, in the need for gap solution, the first configuration information may be SMTC parameters, where the SMTC parameters may include information such as a period and an offset of an SMTC window, and a length of the SMTC window. Therefore, after receiving the SMTC parameters from the access network device, the terminal device may determine the corresponding SMTC window duration based on the SMTC parameters, so that the terminal device can perform SSB measurement and normally receive and send data within the SMTC window duration configured by the access network device. In other words, in the need for gap solution, the SMTC parameters define an occasion on which the terminal device simultaneously performs measurement and normally receives and sends data. In the NCSG solution, the first configuration information may be NCSG parameters, where the NCSG parameters may include information such as a visible interrupt length (visible interruption length, VIL), a visible interrupt repetition period (visible interruption repetition period, VIRP), and an ML. Therefore, after receiving the NCSG parameters from the access network device, the terminal device may determine the ML based on the NCSG parameters, so that the terminal device can perform SSB measurement and normally receive and send data in the ML configured by the access network device. In other words, in the NCSG solution, the NCSG parameters may define an occasion on which the terminal device simultaneously performs measurement and normally receives and sends data. For ease of description, in this embodiment of this application, the reference signal measurement time configuration window duration and the ML may be collectively referred to as the first time domain resource.

It should be noted that, in a handover scenario, when signal quality of UE in a current serving cell is relatively poor, if the UE needs to be handed over to another neighboring cell (a neighboring cell for short) with relatively good signal quality in a timely manner, the UE may measure a carrier on which the neighboring cell is located, so as to perform handover based on a measurement result. In other words, the first target carrier in this embodiment of this application may be a carrier or the like on which the neighboring cell of the serving cell is located. This is specifically determined based on an actual application scenario, and is not limited herein. Generally, the first target carrier is delivered by the access network device to the terminal device. Therefore, after receiving the first target carrier from the access network device and determining the first time domain resource based on the first configuration information, the terminal device may receive a measurement reference signal on the first target carrier and the first time domain resource, to measure a radio channel between the terminal device and the access network device and a related transmission condition based on the measurement reference signal. For example, in a handover scenario, the access network device may send radio resource control (radio resource control, RRC) reconfiguration information to the terminal device, where the RRC reconfiguration information includes the first target carrier. The RRC reconfiguration information may include at least one first target carrier. For ease of understanding, one first target carrier may be used as an example for description in this application.

It should be noted that, the first target carrier and the first serving carrier belong to different bands. For example, a band on which the first target carrier is located is a time division duplex band, and a band on which the first serving carrier is located is a frequency division duplex band. For another example, the band on which the first target carrier is located is a frequency division duplex band, and the band on which the first serving carrier is located is a time division duplex band. For another example, both the band on which the first target carrier is located and the band on which the first serving carrier is located are time division duplex bands, but the two time division duplex bands are two different time division duplex bands, that is, time division duplex bands with different band numbers.

S302: When the first target carrier and the first serving carrier belong to different bands, and there is a scheduling limitation on the first serving carrier or receiving and sending cannot be performed on the first serving carrier and the first target carrier at the same time, the access network device does not schedule the terminal device on the first serving carrier within the reference signal measurement time configuration window duration on the first time domain resource, or the access network device does not schedule the terminal device on the first serving carrier on symbols on which a measurement reference signal on the first time domain resource is located, and on a symbol previous to and a symbol next to contiguous symbols on which the measurement reference signal is located.

In some feasible implementations, the first target carrier and the first serving carrier belong to different bands. From the side of the access network device, when the access network device determines that there is a scheduling limitation on the first serving carrier or that receiving and sending cannot be performed on the first serving carrier and the first target carrier at the same time, the access network device does not schedule the terminal device on the first serving carrier within the reference signal measurement time configuration window duration on the first time domain resource. Alternatively, when the access network device determines that there is a scheduling limitation on the first serving carrier or that receiving and sending cannot be performed on the first serving carrier and the first target carrier at the same time, the access network device does not schedule the terminal device on the first serving carrier on the symbols on which the measurement reference signal on the first time domain resource is located, and on the symbol previous to and the symbol next to the contiguous symbols on which the measurement reference signal is located.

Correspondingly, from the side of the terminal device, when there is a scheduling limitation on the first serving carrier or receiving and sending cannot be performed on the first serving carrier and the first target carrier at the same time, the terminal device does not expect to perform transmission on the first serving carrier within the reference signal measurement time configuration window duration on the first time domain resource. Alternatively, when there is a scheduling limitation on the first serving carrier or receiving and sending cannot be performed on the first serving carrier and the first target carrier at the same time, the terminal device does not expect to perform transmission on the first serving carrier on the symbols on which the measurement reference signal on the first time domain resource is located, and on the symbol previous to and the symbol next to the contiguous symbols on which the measurement reference signal is located.

That receiving and sending cannot be performed on the first serving carrier and the first target carrier at the same time may be understood as follows: The terminal device cannot perform uplink sending and/or downlink receiving on the first serving carrier when receiving a downlink measurement reference signal on the first target carrier. Uplink sending may be understood as that the terminal device sends a physical uplink control channel (physical uplink control channel, PUCCH), the terminal device sends a physical uplink shared channel (physical uplink shared channel, PUSCH), the terminal device sends an uplink sounding reference signal (sounding reference signal, SRS), or the like. This is not limited herein. Downlink receiving may be understood as that the terminal device receives a physical downlink control channel (physical downlink control channel, PDCCH), the terminal device receives a physical downlink shared channel (physical downlink shared channel, PDSCH), the terminal device receives a tracking reference signal (tracking reference signal, TRS), the terminal device receives a CSI-RS for a channel quality indicator (channel quality indicator, CQI), that is, a CSI-RS for CQI, the terminal device receives an enhanced physical downlink control channel (enhanced physical downlink control channel, EPDCCH), or the like. This is not limited herein. In other words, the terminal device can select only one of measurement and data receiving and sending, or the terminal device cannot perform measurement and data receiving and sending at the same time. In this embodiment of this application, only an example in which measurement is preferentially performed and data receiving and sending are abandoned is used for description.

It should be noted that, in this embodiment of this application, the meaning of "receiving and sending cannot be performed on the first serving carrier and the first target carrier at the same time" is the same as the meaning of "there is a scheduling limitation on a first serving carrier". The two descriptions may be interchanged, and this is not limited herein. Correspondingly, the meaning of "receiving and sending can be performed on the first serving carrier and the first target carrier at the same time" is the same as the meaning of "there is no scheduling limitation on a first serving carrier". The two descriptions may also be interchanged, and this is not limited herein. In other words, when the terminal device cannot perform receiving and sending on the first serving carrier and the first target carrier at the same time, it is equivalent to that there is a scheduling limitation on the serving carrier. Therefore, when performing measurement on the first target carrier, the terminal device stops performing uplink sending on the first serving carrier. When the terminal device can perform receiving and sending on the first serving carrier and the first target carrier at the same time, it is equivalent to that there is no scheduling limitation on the serving carrier. Therefore, the terminal device may perform measurement on the first serving carrier, and may also receive/send data on the first serving carrier at the same time.

From the side of the access network device, that the access network device does not schedule the terminal device when there is a scheduling limitation on the first serving carrier or receiving and sending cannot be performed on the first serving carrier and the first target carrier at the same time may be understood as follows: The access network device does not allocate, to the terminal device, a resource used for uplink sending and/or downlink receiving, where the resource includes a time domain resource and/or a frequency domain resource. For example, the time domain resource may be the reference signal measurement time configuration window duration in this embodiment of this application, or the time domain resource may be the symbols on which the measurement reference signal is located, and the symbol previous to and the symbol next to the contiguous symbols on which the measurement reference signal is located; and the frequency domain resource may be the first target carrier, or the like in this embodiment of this application. This is not limited herein. Generally, for uplink sending, the access network device may allocate, to the terminal device in a dynamic or semi-static manner, a resource used for uplink sending. For example, if the dynamic manner is used, the access network device may send downlink control information (downlink control information, DCI) to the terminal device, to allocate, to the terminal device, the resource used for uplink sending. If the semi-static manner is used, the access network device may send RRC signaling to the terminal device, to allocate, to the terminal device, the resource used for uplink sending. For downlink receiving, the access network device may allocate, to the terminal device in a dynamic manner, a resource used for downlink receiving. For example, the access network device may send DCI to the terminal device, to allocate, to the terminal device, the resource used for downlink receiving. Uplink sending may be understood as that the terminal device sends a PUCCH, the terminal device sends a PUSCH, the terminal device sends an uplink SRS, or the like. This is not limited herein. Downlink receiving may be understood as that the terminal device receives a PDSCH, the terminal device receives an EPDCCH, the terminal device receives a PDCCH, the terminal device receives a TRS, the terminal device receives a CSI-RS for CQI, or the like. This is not limited herein.

Correspondingly, from the side of the terminal device, when there is a scheduling limitation on the first serving carrier or receiving and sending cannot be performed on the first serving carrier and the first target carrier at the same time, the terminal device does not expect to perform transmission on the first serving carrier within the reference signal measurement time configuration window duration on the first time domain resource; or the terminal device does not expect to perform transmission on the first serving carrier on the symbols on which the measurement reference signal on the first time domain resource is located, and on the symbol previous to and the symbol next to the contiguous symbols on which the measurement reference signal is located. In other words, the terminal device does not expect to perform uplink sending and/or downlink receiving on the first serving carrier within the reference signal measurement time configuration window duration on the first time domain resource; or the terminal device does not expect to perform uplink sending and/or downlink receiving on the first serving carrier on the symbols on which the measurement reference signal on the first time domain resource is located, and on the symbol previous to and the symbol next to the contiguous symbols on which the measurement reference signal is located. Uplink sending may be understood as that the terminal device sends a PUCCH, the terminal device sends a PUSCH, the terminal device sends an SRS, or the like. This is not limited herein. Downlink receiving may be understood as that the terminal device receives a PDSCH, the terminal device receives an EPDCCH, the terminal device receives a PDCCH, the terminal device receives a TRS, the terminal device receives a CSI-RS for CQI, or the like. This is not limited herein.

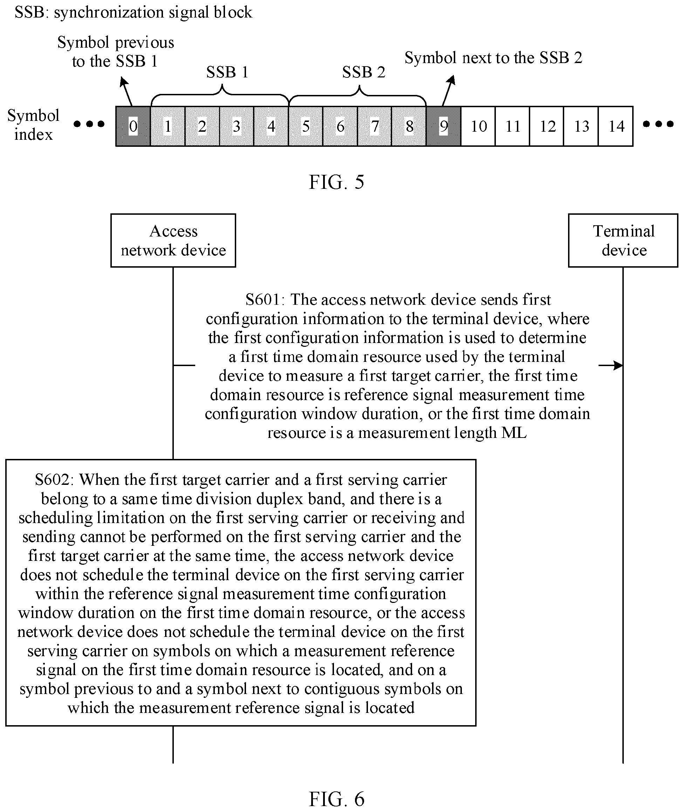

A downlink measurement reference signal in this embodiment of this application may include an SSB or the like. This is not limited herein. For ease of description, only an SSB is used as an example for description in this embodiment of this application. Generally, the SSB needs to occupy four contiguous symbols. Herein, for ease of understanding of the foregoing descriptions of the symbols on which the measurement reference signal on the first time domain resource is located, and the symbol previous to and the symbol next to the contiguous symbols on which the measurement reference signal is located, FIG. 4 and FIG. 5 are used as examples for description in this embodiment of this application.

FIG. 4 is a schematic diagram of a symbol previous to and a symbol next to contiguous SSB symbols according to an embodiment of this application. As shown in FIG. 4, it is assumed that the first time domain resource includes two SSBs (an SSB 1 and an SSB 2 shown in FIG. 4). The SSB 1 occupies four contiguous symbols corresponding to a symbol index 1 to a symbol index 4, and the SSB 2 occupies four contiguous symbols corresponding to a symbol index 8 to a symbol index 11. A symbol previous to the SSB 1 is a symbol corresponding to a symbol index 0, and a symbol next to the SSB 1 is a symbol corresponding to a symbol index 5. A symbol previous to the SSB 2 is a symbol corresponding to a symbol index 7, and a symbol next to the SSB 2 is a symbol corresponding to a symbol index 12. Therefore, for the access network device side, when there is a scheduling limitation on the first serving carrier or receiving and sending cannot be performed on the first serving carrier and the first target carrier at the same time, the access network device does not schedule the terminal device on the first target carrier in symbols corresponding to the symbol index 0 to the symbol index 5 and symbols corresponding to the symbol index 7 to the symbol index 12. For the terminal device, when there is a scheduling limitation on the first serving carrier or receiving and sending cannot be performed on the first serving carrier and the first target carrier at the same time, the terminal device does not expect to perform transmission on the first target carrier on the symbols corresponding to the symbol index 0 to the symbol index 5 and the symbols corresponding to the symbol index 7 to the symbol index 12.

FIG. 5 is a schematic diagram of a symbol previous to and a symbol next to contiguous SSB symbols according to an embodiment of this application. As shown in FIG. 5, it is assumed that the first time domain resource includes two SSBs (an SSB 1 and an SSB 2 shown in FIG. 5). The SSB 1 occupies four contiguous symbols corresponding to a symbol index 1 to a symbol index 4, and the SSB 2 occupies four contiguous symbols corresponding to a symbol index 5 to a symbol index 8. For the access network device side, when there is a scheduling limitation on the first serving carrier or receiving and sending cannot be performed on the first serving carrier and the first target carrier at the same time, the access network device does not schedule the terminal device on the first target carrier on symbols corresponding to a symbol index 0 to a symbol index 9. For the terminal device, when there is a scheduling limitation on the first serving carrier or receiving and sending cannot be performed on the first serving carrier and the first target carrier at the same time, the terminal device does not expect to perform transmission on the first target carrier on the symbols corresponding to the symbol index 0 to the symbol index 9.

It should be noted that, the access network device may receive first information from the terminal device, to determine, based on the first information, whether there is a scheduling limitation on the first serving carrier, or the access network device determines, based on the first information, whether receiving and sending cannot be performed on the first serving carrier and the first target carrier at the same time. In other words, the first information may indicate that there is a scheduling limitation on the first serving carrier, or the first information may indicate that receiving and sending cannot be performed on the first serving carrier and the first target carrier at the same time.

In some feasible implementations, the first information may include at least one carrier pair indicating that there is a scheduling limitation on the first serving carrier, or the first information may include at least one carrier pair in which receiving and sending cannot be performed on the first serving carrier and the first target carrier at the same time. One carrier pair may include one first carrier and one second carrier. Therefore, when determining that the first target carrier and the first serving carrier are included in one of the at least one carrier pair, the access network device may determine that there is a scheduling limitation on the first serving carrier, or when determining that the first target carrier and the first serving carrier are included in one of the at least one carrier pair, the access network device may determine that receiving and sending cannot be performed on the first serving carrier and the first target carrier at the same time. Correspondingly, when the access network device determines that the first target carrier and the first serving carrier are not included in each of the at least one carrier pair, or the first target carrier and the first serving carrier are not included in all of the at least one carrier pair, or the first target carrier and the first serving carrier are not included in any of the at least one carrier pair, it may be determined that there is no scheduling limitation on the first serving carrier, or when determining that the first target carrier and the first serving carrier are included in each of the at least one carrier pair, the access network device may determine that receiving and sending cannot be performed on the first serving carrier and the first target carrier at the same time.

For example, the first information includes at least one carrier pair on which there is a scheduling limitation. It is assumed that the at least one carrier pair is a carrier pair 1 and a carrier pair 2, where a first carrier and a second carrier on the carrier pair 1 are 5 MHz and 6 MHz respectively (that is, the carrier pair 1={5 MHz, 6 MHz}), and a first carrier and a second carrier on the carrier pair 2 are 7 MHz and 8 MHz respectively (that is, the carrier pair 2={7 MHz, 8 MHz}). If the first serving carrier is 5 MHz, and the first target carrier is 6 MHz, because 5 MHz and 6 MHz are included in the carrier pair 1, it may be determined that there is a scheduling limitation on the first serving carrier or that receiving and sending cannot be performed on the first serving carrier and the first target carrier at the same time. If the first serving carrier is 5 MHz, and the first target carrier is 7 MHz, because 5 MHz and 7 MHz are not included in the carrier pair 1 or the carrier pair 2, it may be determined that there is no scheduling limitation on the first serving carrier, or that receiving and sending can be performed on the first serving carrier and the first target carrier at the same time.

Optionally, the first information may alternatively include at least one carrier pair on which there is no scheduling limitation, or the first information includes at least one carrier pair on which receiving and sending can be performed on the first serving carrier and the first target carrier at the same time. One carrier pair includes one first carrier and one second carrier. Therefore, when the access network device determines that the first target carrier and the first serving carrier are not included in any of the at least one carrier pair (that is, when the access network device determines that the first target carrier and the first serving carrier are not included in all of the at least one carrier pair, or when the access network device determines that the first target carrier and the first serving carrier are not included in each of the at least one carrier pair), it may be determined that there is a scheduling limitation on the first serving carrier, or when determining that the first target carrier and the first serving carrier are not included in any of the at least one carrier pair, the access network device may determine that receiving and sending cannot be performed on the first serving carrier and the first target carrier at the same time. Therefore, when determining that the first target carrier and the first serving carrier are included in one of the at least one carrier pair, the access network device may determine that there is no scheduling limitation on the first serving carrier, or when determining that the first target carrier and the first serving carrier are included in one of the at least one carrier pair, the access network device may determine that receiving and sending can be performed on the first serving carrier and the first target carrier at the same time.

For example, the first information includes at least one carrier pair on which there is no scheduling limitation. It is assumed that the at least one carrier pair is a carrier pair 1 and a carrier pair 2, where a first carrier and a second carrier on the carrier pair 1 are 5 MHz and 6 MHz respectively (that is, the carrier pair 1={5 MHz, 6 MHz}), and a first carrier and a second carrier on the carrier pair 2 are 7 MHz and 8 MHz respectively (that is, the carrier pair 2={7 MHz, 8 MHz}). If the first serving carrier is 5 MHz, and the first target carrier is 7 MHz, because 5 MHz and 7 MHz are not included in the carrier pair 1 or the carrier pair 2, it may be determined that there is a scheduling limitation on the first serving carrier, or receiving and sending cannot be performed on the first serving carrier and the first target carrier at the same time. If the first serving carrier is 5 MHz, and the first target carrier is 6 MHz, because 5 MHz and 6 MHz are included in the carrier pair 1, it may be determined that there is no scheduling limitation on the first serving carrier or that receiving and sending can be performed on the first serving carrier and the first target carrier at the same time.

It should be noted that, when the first information includes a carrier pair, the first information may be reported in a manner of reporting at least one carrier combination.

Specifically, in a possible implementation, one carrier combination may include one first carrier and one second carrier. Therefore, one or more carrier pairs that have a scheduling limitation or in which receiving and sending cannot be performed at the same time can be determined based on the carrier combination.

For example, a plurality of carrier combinations reported by the terminal device may be a carrier combination 1, a carrier combination 2, a carrier combination 3, and a carrier combination 4.

Carrier combination 1={5 MHz, 6 MHz}, that is, a carrier pair including 5 MHz and 6 MHz has a scheduling limitation or cannot support receiving and sending at the same time.

Carrier combination 2={7 MHz, 8 MHz}, that is, a carrier pair including 7 MHz and 8 MHz has a scheduling limitation or cannot support receiving and sending at the same time.

Carrier combination 3={5 MHz, 8 MHz}, that is, a carrier pair including 5 MHz and 8 MHz has a scheduling limitation or cannot support receiving and sending at the same time.

Carrier combination 4={7 MHz, 6 MHz}, that is, a carrier pair including 7 MHz and 6 MHz has a scheduling limitation or cannot support receiving and sending at the same time.

In another possible implementation, one carrier combination may include one first carrier and a plurality of second carriers. Therefore, one or more carrier pairs that have a scheduling limitation or in which receiving and sending cannot be performed at the same time can be determined based on the carrier combination.

For example, the plurality of carrier combinations reported by the terminal device may be a carrier combination 5 and a carrier combination 6.

Carrier combination 5={5Mhz, {6 MHz, 8 MHz}}, that is, a carrier pair including 5 MHz and 6 MHz has a scheduling limitation or cannot support receiving and sending at the same time, and a carrier pair including 5 MHz and 8 MHz also has a scheduling limitation or cannot support receiving and sending at the same time.

Carrier combination 6={7Mhz, {6 MHz, 8 MHz}}, that is, a carrier pair including 7 MHz and 6 MHz has a scheduling limitation or cannot support receiving and sending at the same time, and a carrier pair including 7 MHz and 8 MHz also has a scheduling limitation or cannot support receiving and sending at the same time.

In another possible implementation, one carrier combination may include a plurality of first carriers and one second carrier. Therefore, one or more carrier pairs that have a scheduling limitation or in which receiving and sending cannot be performed at the same time can be determined based on the carrier combination.

For example, carrier combinations reported by the terminal device may be a carrier combination 7 and a carrier combination 8.

Carrier combination 7={{5 MHz, 7 MHz}, 6Mhz}, that is, a carrier pair including 5 MHz and 6 MHz has a scheduling limitation or cannot support receiving and sending at the same time, and a carrier pair including 7 MHz and 6 MHz also has a scheduling limitation or cannot support receiving and sending at the same time.

Carrier combination 8={{5 MHz, 7 MHz}, 8Mhz}, that is, a carrier pair including 5 MHz and 8 MHz has a scheduling limitation or cannot support receiving and sending at the same time, and a carrier pair including 7 MHz and 8 MHz also has a scheduling limitation or cannot support receiving and sending at the same time.

Optionally, the first information may alternatively include a resource combination on which there is a scheduling limitation; or the first information includes a resource combination on which receiving and sending cannot be performed on the first serving carrier and the first target carrier at the same time. The resource combination includes cell identity information and a second carrier, the cell identity information includes identity information of the first serving cell, the second carrier includes the first target carrier, and a carrier on which the first serving cell is located is the first serving carrier.

Optionally, the first information may alternatively include a resource combination on which there is no scheduling limitation; or the first information includes a resource combination on which receiving and sending can be performed on the first serving carrier and the first target carrier at the same time. The resource combination includes cell identity information and a second carrier, the cell identity information does not include identity information of the first serving cell, the second carrier does not include the first target carrier, and a carrier on which the first serving cell is located is the first serving carrier.

For ease of description, in this embodiment of this application, the resource combination indicating that there is a scheduling limitation and that includes the cell identity information and the second carrier, and the resource combination indicating that there is no scheduling limitation and that includes the cell identity information and the second carrier may be collectively referred to as a first resource combination.

It should be noted that, in a possible implementation, one first resource combination may include identity information of one cell and one second carrier. In another possible implementation, one first resource combination may include identity information of one cell and a plurality of second carriers. In another possible implementation, one first resource combination may include identity information of a plurality of cells and one second carrier.

Optionally, the first information may alternatively include at least one band pair on which there is a scheduling limitation, or the first information may include at least one band pair in which receiving and sending cannot be performed on the first serving carrier and the first target carrier at the same time. One band pair includes one first band and one second band. Therefore, when determining that the band on which the first target carrier is located and the band on which the first serving carrier is located are included in one of the at least one band pair, the access network device may determine that there is a scheduling limitation on the first serving carrier, or when determining that the band on which the first target carrier is located and the band on which the first serving carrier is located are included in one of the at least one band pair, the access network device may determine that receiving and sending cannot be performed on the first serving carrier and the first target carrier at the same time. Correspondingly, when determining that the band on which the first target carrier is located and the band on which the first serving carrier is located are not included in each of the at least one band pair, or the band on which the first target carrier is located and the band on which the first serving carrier is located are not included in all of the at least one band pair, or the band on which the first target carrier is located and the band on which the first serving carrier is located are not included in any of the at least one band pair, the access network device may determine that there is no scheduling limitation on the first serving carrier; or when determining that the band on which the first target carrier is located and the band on which the first serving carrier is located are not included in each of the at least one band pair, the access network device may determine that receiving and sending can be performed on the first serving carrier and the first target carrier at the same time. A type of the first band and a type of the second band may be respectively a frequency division duplex band and a time division duplex band; or the type of the first band and the type of the second band are respectively a time division duplex band and a frequency division duplex band; or the first band and the second band are different time division duplex bands.

For example, the first information includes at least one band pair on which there is a scheduling limitation. It is assumed that the at least one band pair is a band pair 1 and a band pair 2, where a first band and a second band on the band pair 1 are bands corresponding to a band number 1 and a band number 2, a frequency range corresponding to the band number 1 is 0 MHz to 5 MHz, a frequency range corresponding to the band number 2 is 6 MHz to 10 MHz (that is, the band pair 1={band number 1, band number 2}), a first band and a second band on the band pair 2 are bands corresponding to a band number 3 and a band number 4, a frequency range corresponding to the band number 3 is 11 MHz to 15 MHz, and a frequency range corresponding to the band number 4 is 16 MHz to 20 MHz (that is, the band pair 2={band number 3, band number 4}). If the first serving carrier is 4 MHz, and the first target carrier is 6 MHz, because 4 MHz is within a band range 0 MHz to 5 MHz (that is, a band corresponding to the band number 1), and 6 MHz is within a band range 6 MHz to 10 MHz (that is, a band corresponding to the band number 2), that is, the band on which the first serving carrier is located and the band on which the first target carrier is located are included in the band pair 1, it may be determined that there is a scheduling limitation on the first serving carrier or that receiving and sending cannot be performed on the first serving carrier and the first target carrier at the same time. If the first serving carrier is 4 MHz, and the first target carrier is 14 MHz, because a band on which 4 MHz is located (that is, a band corresponding to the band number 1) and a band on which 14 MHz is located (that is, a band corresponding to the band number 3) are not included in the band pair 1 or the band pair 2, it may be determined that there is no scheduling limitation on the first serving carrier or that receiving and sending can be performed on the first serving carrier and the first target carrier at the same time.

Optionally, the first information may alternatively include at least one band pair on which there is no scheduling limitation, or the first information includes at least one band pair in which receiving and sending can be performed on the first serving carrier and the first target carrier at the same time. One band pair includes one first band and one second band. Therefore, when the access network device determines that the band on which the first target carrier is located and the band on which the first serving carrier is located are not included in any of the at least one band pair (that is, when the access network device determines that the band on which the first target carrier is located and the band on which the first serving carrier is located are not included in all of the at least one band pair, or when the access network device determines that the band on which the first target carrier is located and the band on which the first serving carrier is located are not included in each of the at least one band pair), it may be determined that there is a scheduling limitation on the first serving carrier; or when determining that the band on which the first target carrier is located and the band on which the first serving carrier is located are not included in any of the at least one band pair, the access network device may determine that receiving and sending cannot be performed on the first serving carrier and the first target carrier at the same time. Correspondingly, when determining that the first target carrier and the first serving carrier are included in one of the at least one band pair, the access network device may determine that there is no scheduling limitation on the first serving carrier, or when determining that the first target carrier and the first serving carrier are included in one of the at least one band pair, the access network device may determine that receiving and sending can be performed on the first serving carrier and the first target carrier at the same time. A type of the first band and a type of the second band may be respectively a frequency division duplex band and a time division duplex band; or the type of the first band and the type of the second band are respectively a time division duplex band and a frequency division duplex band; or the first band and the second band are different time division duplex bands.

For example, the first information includes at least one band pair on which there is no scheduling limitation. It is assumed that the at least one band pair is a band pair 1 and a band pair 2, where a first band and a second band on the band pair 1 are bands corresponding to a band number 1 and a band number 2, a frequency range corresponding to the band number 1 is 0 MHz to 5 MHz, a frequency range corresponding to the band number 2 is 6 MHz to 10 MHz (that is, the band pair 1={band number 1, band number 2}), a first band and a second band on the band pair 2 are bands corresponding to a band number 3 and a band number 4, a frequency range corresponding to the band number 3 is 11 MHz to 15 MHz, and a frequency range corresponding to the band number 4 is 16 MHz to 20 MHz (that is, the band pair 2={band number 3, band number 4}). If the first serving carrier is 4 MHz, and the first target carrier is 14 MHz, because a band on which 4 MHz is located (that is, a band corresponding to the band number 1) and a band on which 14 MHz is located (that is, a band corresponding to the band number 3) are not included in the band pair 1 or the band pair 2, it may be determined that there is a scheduling limitation on the first serving carrier or that receiving and sending cannot be performed on the first serving carrier and the first target carrier at the same time. If the first serving carrier is 4 MHz, and the first target carrier is 6 MHz, because 4 MHz is within a band range of 0 MHz to 5 MHz (that is, a band corresponding to the band number 1), and 6 MHz is within a band range of 6 MHz to 10 MHz (that is, a band corresponding to the band number 2), that is, the band on which the first serving carrier is located and the band on which the first target carrier is located are included in the band pair 1, it may be determined that there is no scheduling limitation on the first serving carrier or that receiving and sending can be performed on the first serving carrier and the first target carrier at the same time.

It should be noted that, when the first information includes the band pair, the first information may be reported in a manner of reporting at least one band combination. Specifically, in a possible implementation, one band combination may include one first carrier and one second carrier. In another possible implementation, one band combination may include one first carrier and a plurality of second carriers. In another possible implementation, one band combination may include a plurality of first carriers and one second carrier. Therefore, one or more band pairs that have a scheduling limitation or in which receiving and sending cannot be performed at the same time can be determined based on the band combination.

Optionally, the first information may alternatively include at least one band type pair on which there is a scheduling limitation, or the first information includes at least one band type pair in which receiving and sending cannot be performed on the first serving carrier and the first target carrier at the same time. One band type pair includes one first band type and one second band type. Therefore, when determining that a type of the band on which the first target carrier is located and a type of the band on which the first serving carrier is located are included in one of the at least one band type pair, the access network device may determine that there is a scheduling limitation on the first serving carrier, or when determining that the type of the band on which the first target carrier is located and the type of the band on which the first serving carrier is located are included in one of the at least one band type pair, the access network device may determine that receiving and sending cannot be performed on the first serving carrier and the first target carrier at the same time. The first band type and the second band type may be respectively an FDD band and a TDD band (that is, FDD-TDD bands), or the first band type and the second band type are respectively a TDD band and an FDD band (that is, TDD-FDD bands), or both the first band type and the second band type are TDD bands, but are not a same TDD band, that is, inter-TDD-TDD bands.

For example, the first information includes at least one band type pair on which there is a scheduling limitation. It is assumed that the at least one band type pair is a band type pair 1, a band type pair 2, and a band type pair 3. A first band type and a second band type in the band type pair 1 are respectively a TDD band and an FDD band (that is, TDD-FDD bands), a first band type and a second band type in the band type pair 2 are respectively an FDD band and a TDD band (that is, FDD-TDD bands), and a first band type and a second band type in the band type pair 3 are respectively TDD bands, but are not a same TDD band (that is, inter-TDD-TDD bands). If the band type of the band on which the first serving carrier is located is a TDD band, and the band type of the band on which the first target carrier is located is a TDD band, whether the band on which the first serving carrier is located and the band on which the first target carrier is located are a same TDD band needs to be further determined. If the band on which the first serving carrier is located and the band on which the first target carrier is located correspond to different band numbers, it may be determined that there is a scheduling limitation on the first serving carrier or that receiving and sending cannot be performed on the first serving carrier and the first target carrier at the same time; or if the band on which the first serving carrier is located and the band on which the first target carrier is located correspond to a same band number, it may be determined that there is no scheduling limitation on the first serving carrier and the first target carrier, or that receiving and sending can be performed on the first serving carrier and the first target carrier at the same time. If the band type of the band on which the first serving carrier is located is a TDD band, and the band type of the band on which the first target carrier is located is an FDD band, it may be determined that there is a scheduling limitation on the first serving carrier or that receiving and sending cannot be performed on the first serving carrier and the first target carrier at the same time.

It should be noted that, when the first information includes the band type pair, the first information may be reported in a manner of reporting at least one band type combination. Specifically, in a possible implementation, one band type combination may include one first band type and one second band type. In another possible implementation, one band type combination may include one first band type and a plurality of second band types. In another possible implementation, one band type combination may include a plurality of first band types and one second band type. Therefore, one or more band type pairs that have a scheduling limitation or in which receiving and sending cannot be performed at the same time can be determined based on the band type combination.

Optionally, the first information may alternatively include a resource combination on which there is a scheduling limitation; or the first information includes a resource combination on which receiving and sending cannot be performed on the first serving carrier and the first target carrier at the same time. The resource combination may include a first carrier and a second band, where the first carrier includes the first serving carrier, and the second band includes the band on which the first target carrier is located; or the resource combination includes cell identity information and a second band, where the cell identity information may include identity information of the first serving cell, and the second band includes the band on which the first target carrier is located. It may be understood that a carrier on which the first serving cell is located is the first serving carrier. It should be noted that, the identity information of the cell in this embodiment of this application may be a cell identity (cell identity), a cell index (index), or the like. For example, the cell identity may be a physical cell identity (physical cell identity, PCI) of the cell, or a cell identity or a cell global identity (cell global identity, CGI) in a public land mobile network (public land mobile network, PLMN)/non-public network (non-public network, NPN). For another example, the cell index may be an index allocated by a network device to a cell in an aggregated spectrum. This is not limited herein.

For ease of description, in this embodiment of this application, the resource combination indicating that there is a scheduling limitation and that includes the first carrier and the second band, or the resource combination including the cell identity information and the second band may be described as a second resource combination.

It may be understood that, the first information may include one or more second resource combinations that have a scheduling limitation, or the first information may include one or more second resource combinations in which receiving and sending cannot be performed on the first serving carrier and the first target carrier at the same time.

In a possible implementation, one second resource combination may include one first carrier and one second band, or one second resource combination includes identity information of one cell and one second band.

For example, a plurality of second resource combinations reported by the terminal device may be a resource combination 1, a resource combination 2, a resource combination 3, a resource combination 4, a resource combination 5, and a resource combination 6.

A first carrier and a second band in the resource combination 1 may be respectively 5 MHz and a band that corresponds to a band number 1, that is, the resource combination 1={5 MHz, band number 1}.

A first carrier and a second band in the resource combination 2 may be respectively 7 MHz and a band that corresponds to a band number 2, that is, the resource combination 2={ 7 MHz, band number 2}.

A first carrier and a second band in the resource combination 3 may be respectively 5 MHz and a band that corresponds to a band number 2, that is, the resource combination 3={ 5 MHz, band number 2}.

A first carrier and a second band in the resource combination 4 may be respectively 7 MHz and a band that corresponds to a band number 1, that is, the resource combination 4={ 7 MHz, band number 1}.

A first carrier and a second band in the resource combination 5 may be respectively 6 MHz and a band that corresponds to a band number 3, that is, the resource combination 5={ 6 MHz, band number 3}.

A first carrier and a second band in the resource combination 6 may be respectively 9 MHz and a band that corresponds to a band number 4, that is, the resource combination 6={ 9 MHz, band number 4}.

A frequency range corresponding to the band number 1 may be 0 MHz to 5 MHz, a frequency range corresponding to the band number 2 may be 6 MHz to 10 MHz, a frequency range corresponding to the band number 3 may be 11 MHz to 15 MHz, and a frequency range corresponding to the band number 4 may be 16 MHz to 20 MHz.

For another example, the plurality of second resource combinations reported by the terminal device may be a resource combination 1, a resource combination 2, a resource combination 3, a resource combination 4, a resource combination 5, and a resource combination 6.

Cell identity information and a second band in the resource combination 1 may be respectively a cell identity 1 and a band that corresponds to a band number 1, that is, the resource combination 1={cell identity 1, band number 1}.

Cell identity information and a second band in the resource combination 2 may be respectively a cell identity 2 and a band that corresponds to a band number 2, that is, the resource combination 2={cell identity 2, band number 2}.

Cell identity information and a second band in the resource combination 3 may be respectively a cell identity 1 and a band that corresponds to a band number 2, that is, the resource combination 3={cell identity 1, band number 2}.

Cell identity information and a second band in the resource combination 4 may be respectively a cell identity 2 and a band that corresponds to a band number 1, that is, the resource combination 4={cell identity 2, band number 1}.

Cell identity information and a second band in the resource combination 5 may be respectively a cell identity 3 and a band that corresponds to a band number 3, that is, the resource combination 5={cell identity 3, band number 3}.

Cell identity information and a second band in the resource combination 6 may be respectively a cell identity 4 and a band that corresponds to a band number 4, that is, the resource combination 6={cell identity 4, band number 4}.

A carrier on which the cell identity 1 is located may be 5 MHz, a carrier on which the cell identity 2 is located may be 7 MHz, a carrier on which the cell identity 3 is located may be 6 MHz, and a carrier on which the cell identity 4 is located may be 9 MHz. A frequency range corresponding to the band number 1 may be 0 MHz to 5 MHz, a frequency range corresponding to the band number 2 may be 6 MHz to 10 MHz, a frequency range corresponding to the band number 3 may be 11 MHz to 15 MHz, and a frequency range corresponding to the band number 4 may be 16 MHz to 20 MHz.

In another possible implementation, one second resource combination may include one first carrier and a plurality of second bands, or one second resource combination includes identity information of one cell and a plurality of second bands.

For example, second resource combinations reported by the terminal device may be a resource combination 7, a resource combination 8, a resource combination 9, and a resource combination 10.

Resource combination 7={5 MHz, {band number 1, band number 2}}, that is, a combination of 5 MHz and the band number 1 has a scheduling limitation or cannot support receiving and sending at the same time, and a combination of 5 MHz and the band number 2 also has a scheduling limitation or cannot support receiving and sending at the same time.

Resource combination 8={7 MHz, {band number 1, band number 2}}, that is, a combination of 7 MHz and the band number 1 has a scheduling limitation or cannot support receiving and sending at the same time, and a combination of 7 MHz and the band number 2 also has a scheduling limitation or cannot support receiving and sending at the same time.

Resource combination 9={ 6 MHz, band number 3}, that is, a combination of 6 MHz and the band number 3 has a scheduling limitation or cannot support receiving and sending at the same time.

Resource combination 10={9 MHz, band number 4}, that is, a combination of 9 MHz and the band number 4 has a scheduling limitation or cannot support receiving and sending at the same time.

A frequency range corresponding to the band number 1 may be 0 MHz to 5 MHz, a frequency range corresponding to the band number 2 may be 6 MHz to 10 MHz, a frequency range corresponding to the band number 3 may be 11 MHz to 15 MHz, and a frequency range corresponding to the band number 4 may be 16 MHz to 20 MHz.

For another example, second resource combinations reported by the terminal device may be a resource combination 7, a resource combination 8, a resource combination 9, and a resource combination 10.

Resource combination 7={ cell identity 1, {band number 1, band number 2}}, that is, a combination of the cell identity 1 and the band number 1 has a scheduling limitation or cannot support receiving and sending at the same time, and a combination of the cell identity 1 and the band number 2 also has a scheduling limitation or cannot support receiving and sending at the same time.

Resource combination 8={ cell identity 2, {band number 1, band number 2}}, that is, a combination of the cell identity 2 and the band number 1 has a scheduling limitation or cannot support receiving and sending at the same time, and a combination of the cell identity 2 and the band number 2 also has a scheduling limitation or cannot support receiving and sending at the same time.

Resource combination 9={ cell identity 3, band number 3}, that is, a combination of the cell identity 3 and the band number 3 has a scheduling limitation or cannot support receiving and sending at the same time.

Resource combination 10={cell identity 4 band number 4}, that is, a combination of the cell identity 4 and the band number 4 has a scheduling limitation or cannot support receiving and sending at the same time.

A carrier on which the cell identity 1 is located may be 5 MHz, a carrier on which the cell identity 2 is located may be 7 MHz, a carrier on which the cell identity 3 is located may be 6 MHz, and a carrier on which the cell identity 4 is located may be 9 MHz. A frequency range corresponding to the band number 1 may be 0 MHz to 5 MHz, a frequency range corresponding to the band number 2 may be 6 MHz to 10 MHz, a frequency range corresponding to the band number 3 may be 11 MHz to 15 MHz, and a frequency range corresponding to the band number 4 may be 16 MHz to 20 MHz.

It should be noted that, the following illustratively describes a signaling design in which one resource combination includes identity information of one cell and a plurality of bands. For example, the first information may be included in new signaling, and an information element (information element, IE) corresponding to the new signaling may be:

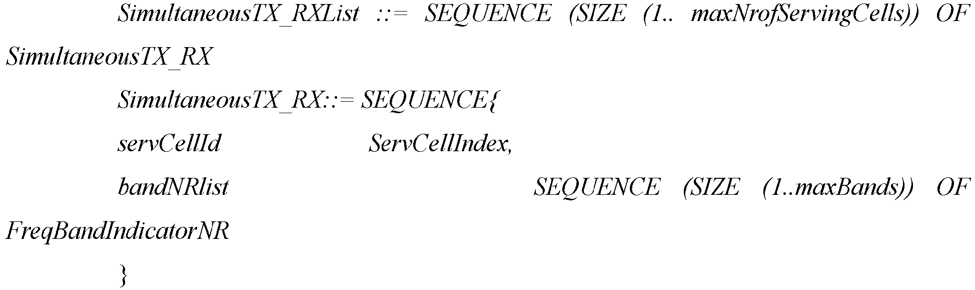

SimultaneousTX_RX represents "there is a scheduling limitation" or is described as "receiving and sending cannot be performed at the same time"; or SimultaneousTX_RX represents "there is no scheduling limitation" or is described as "receiving and sending can be performed at the same time", servCellId represents cell identity information, and bandNRlist represents band list information.

It may be understood that, *SimultaneousTX_RXList* includes *SimultaneousTX_RX* corresponding to one or more cells, *SimultaneousTX_RX* includes the cell identity information servCellId and the band list information *bandNRlist,* and the band list information includes information about one or more bands.

In another possible implementation, one second resource combination may include a plurality of first carriers and one second band, or one second resource combination includes identity information of a plurality of cells and one second band. It may be understood that, a combination described in this embodiment of this application may be replaced with a word such as a set or a list. This is not limited herein.

For example, second resource combinations reported by the terminal device may be a resource combination 11, a resource combination 12, a resource combination 13, and a resource combination 14.

Resource combination 11={{5 MHz, 7 MHz}, band number 1}, that is, a combination of 5 MHz and the band number 1 has a scheduling limitation or cannot support receiving and sending at the same time, and a combination of 7 MHz and the band number 1 also has a scheduling limitation or cannot support receiving and sending at the same time.

Resource combination 12={{5 MHz, 7 MHz}, band number 2}, that is, a combination of 5 MHz and the band number 2 has a scheduling limitation or cannot support receiving and sending at the same time, and a combination of 7 MHz and the band number 2 also has a scheduling limitation or cannot support receiving and sending at the same time.

Resource combination 13={6 MHz, band number 3}, that is, a combination of 6 MHz and the band number 3 has a scheduling limitation or cannot support receiving and sending at the same time.

Resource combination 14={9 MHz, band number 4}, that is, a combination of 9 MHz and the band number 4 has a scheduling limitation or cannot support receiving and sending at the same time.

A frequency range corresponding to the band number 1 may be 0 MHz to 5 MHz, a frequency range corresponding to the band number 2 may be 6 MHz to 10 MHz, a frequency range corresponding to the band number 3 may be 11 MHz to 15 MHz, and a frequency range corresponding to the band number 4 may be 16 MHz to 20 MHz.

For another example, second resource combinations reported by the terminal device may be a resource combination 11, a resource combination 12, a resource combination 13, and a resource combination 14.

Resource combination 11={ { cell identity 1, cell identity 2}, band number 1}, that is, a combination of the cell identity 1 and the band number 1 has a scheduling limitation or cannot support receiving and sending at the same time, and a combination of the cell identity 2 and the band number 1 also has a scheduling limitation or cannot support receiving and sending at the same time.

Resource combination 12={ {cell identity 1, cell identity 2}, band number 2}, that is, a combination of the cell identity 1 and the band number 2 has a scheduling limitation or cannot support receiving and sending at the same time, and a combination of the cell identity 2 and the band number 2 also has a scheduling limitation or cannot support receiving and sending at the same time.

Resource combination 13={cell identity 3, band number 3}, that is, a combination of the cell identity 3 and the band number 3 has a scheduling limitation or cannot support receiving and sending at the same time.

Resource combination 14={cell identity 4, band number 4}, that is, a combination of the cell identity 4 and the band number 4 has a scheduling limitation or cannot support receiving and sending at the same time.

A carrier on which the cell identity 1 is located may be 5 MHz, a carrier on which the cell identity 2 is located may be 7 MHz, a carrier on which the cell identity 3 is located may be 6 MHz, and a carrier on which the cell identity 4 is located may be 9 MHz. A frequency range corresponding to the band number 1 may be 0 MHz to 5 MHz, a frequency range corresponding to the band number 2 may be 6 MHz to 10 MHz, a frequency range corresponding to the band number 3 may be 11 MHz to 15 MHz, and a frequency range corresponding to the band number 4 may be 16 MHz to 20 MHz.

It should be noted that, the following illustratively describes a signaling design in which one resource combination includes identity information of a plurality of cells and one band. For example, the first information may be included in extended signaling of existing signaling, and the existing signaling may be NeedForGapsNR-r16, or the like. This is not limited herein. For example, an IE of the extended signaling of the existing signaling may be:

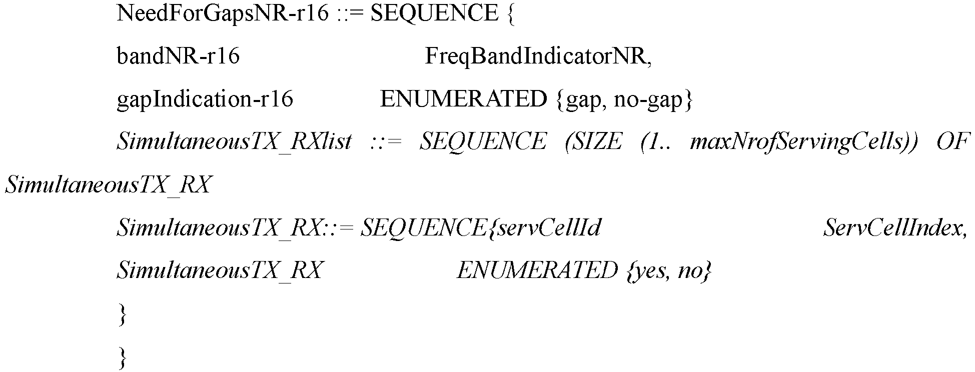

The italic part of signaling is an example of the IE of the extended signaling in this application. bandNR-r16 represents a band, servCellId represents cell identity information, SimultaneousTX_RX represents "whether there is a scheduling limitation" or is described as "whether receiving and sending can be performed at the same time", where when SimultaneousTX_RX is yes, it indicates that there is no scheduling limitation or receiving and sending can be performed at the same time, or when SimultaneousTX_RX is no, it indicates that there is a scheduling limitation or receiving and sending cannot be performed at the same time.

For ease of description, the following part of this embodiment of this application is mainly described by using an example in which one second resource combination includes one first carrier and one second band. Based on this, when determining that a second resource combination including the first serving carrier and the band on which the first target carrier is located is included in the at least one second resource combination, the access network device may determine that there is a scheduling limitation on the first serving carrier, or when determining that the second resource combination including the first serving carrier and the band on which the first target carrier is located is included in the at least one second resource combination, the access network device may determine that receiving and sending cannot be performed on the first serving carrier and the first target carrier at the same time. Correspondingly, when determining that a second resource combination including the first serving carrier and the band on which the first target carrier is located is not included in the at least one second resource combination, the access network device may determine that there is no scheduling limitation on the first serving carrier, or when determining that the second resource combination including the first serving carrier and the band on which the first target carrier is located is not included in the at least one second resource combination, the access network device may determine that receiving and sending can be performed on the first serving carrier and the first target carrier at the same time.

For example, the first information includes at least one second resource combination on which there is a scheduling limitation. It is assumed that the at least one second resource combination is a resource combination 1 and a resource combination 2. A first carrier and a second band in the resource combination 1 are respectively 5 MHz and a band that corresponds to a band number 1, and a first carrier and a second band in the resource combination 2 are respectively 7 MHz and a band that corresponds to a band number 2. A frequency range corresponding to the band number 1 is 0 MHz to 5 MHz, and a frequency range corresponding to the band number 2 is 6 MHz to 10 MHz. If the first serving carrier is 5 MHz, and the band on which the first target carrier is located is the band corresponding to the band number 1, because 5 MHz and the band that corresponds to the band number 1 are included in the resource combination 1, it may be determined that there is a scheduling limitation on the first serving carrier or that receiving and sending cannot be performed on the first serving carrier and the first target carrier at the same time. If the first serving carrier is 5 MHz, and the band on which the first target carrier is located is the band corresponding to the band number 2, because 5 MHz and the band that corresponds to the band number 2 are not included in the resource combination 1 or the resource combination 2, it may be determined that there is no scheduling limitation on the first serving carrier or that receiving and sending can be performed on the first serving carrier and the first target carrier at the same time.

Optionally, the first information may alternatively include a resource combination on which there is no scheduling limitation; or the first information includes a resource combination on which receiving and sending can be performed on the first serving carrier and the first target carrier at the same time. The resource combination may include a first carrier and a second band, where the first carrier does not include the first serving carrier, and the second band does not include the band on which the first target carrier is located; or the resource combination includes cell identity information and a second band, where the cell identity information does not include identity information of the first serving cell, and the second band does not include the band on which the first target carrier is located. It may be understood that a carrier on which the first serving cell is located is the first serving carrier.

For ease of description, in this embodiment of this application, the resource combination indicating that there is no scheduling limitation and that includes the first carrier and the second band, or the resource combination including the cell identity information and the second band may be described as a third resource combination.

It may be understood that the first information may include one or more third resource combinations that have no scheduling limitation, or the first information may include one or more third resource combinations in which receiving and sending cannot be performed on the first serving carrier and the first target carrier at the same time.

In a possible implementation, one third resource combination may include one first carrier and one second band, or one third resource combination includes identity information of one cell and one second band. In another possible implementation, one third resource combination may include one first carrier and a plurality of second bands, or one third resource combination includes identity information of one cell and a plurality of second bands. In another possible implementation, one third resource combination may include a plurality of first carriers and one second band, or one third resource combination includes identity information of a plurality of cells and one second band.

For ease of description, the following part of this embodiment of this application is mainly described by using an example in which one third resource combination includes one first carrier and one second band. Based on this, when determining that the first serving carrier and the band on which the first target carrier is located are not included in the at least one third resource combination, the access network device may determine that there is a scheduling limitation on the first serving carrier, or when determining that the first serving carrier and the band on which the first target carrier is located are not included in the at least one third resource combination, the access network device may determine that receiving and sending cannot be performed on the first serving carrier and the first target carrier at the same time. Correspondingly, when determining that the first target carrier and the first serving carrier are included in the at least one third resource combination, the access network device may determine that there is no scheduling limitation on the first serving carrier, or when determining that the first target carrier and the first serving carrier are included in the at least one third resource combination, the access network device may determine that receiving and sending can be performed on the first serving carrier and the first target carrier at the same time.

For example, the first information includes at least one third resource combination on which there is no scheduling limitation. It is assumed that the at least one third resource combination is a resource combination 1 and a resource combination 2. A first carrier and a second band in the resource combination 1 are respectively 5 MHz and a band that corresponds to a band number 1, and a first carrier and a second band in the resource combination 2 are respectively 7 MHz and a band that corresponds to a band number 2. A frequency range corresponding to the band number 1 is 0 MHz to 5 MHz, and a frequency range corresponding to the band number 2 is 6 MHz to 10 MHz. If the first serving carrier is 5 MHz, and the band on which the first target carrier is located is the band corresponding to the band number 2, because 5 MHz and the band that corresponds to the band number 2 are not included in the resource combination 1 or the resource combination 2, it may be determined that there is a scheduling limitation on the first serving carrier or that receiving and sending cannot be performed on the first serving carrier and the first target carrier at the same time. If the first serving carrier is 5 MHz, and the band on which the first target carrier is located is the band corresponding to the band number 1, because 5 MHz and the band that corresponds to the band number 1 are included in the resource combination 1, it may be determined that there is no scheduling limitation on the first serving carrier or that receiving and sending can be performed on the first serving carrier and the first target carrier at the same time.

It should be noted that, in a carrier aggregation (carrier aggregation, CA) scenario, the terminal device may have a plurality of serving cells or serving carriers, and only one serving cell (that is, the first serving cell) or one serving carrier (that is, the first serving carrier) is used as an example in the foregoing description for illustration.

It should be noted that, in this embodiment of this application, including may be described as including. This is not limited herein.

Optionally, the first information may also directly indicate whether there is a scheduling limitation or a capability of performing receiving and sending at the same time. For example, the first information may include one bit. When a bit value of the bit is 1, it may indicate that there is a scheduling limitation or that receiving and sending cannot be performed at the same time. When a bit value is 0, it indicates that there is no scheduling limitation or that receiving and sending can be performed at the same time. Alternatively, the bit value 1 may indicate that there is no scheduling limitation or that receiving and sending can be performed at the same time, and the bit value 0 indicates that there is a scheduling limitation or that receiving and sending cannot be performed at the same time. This is specifically determined based on an actual scenario, and is not limited herein. For another example, one field indicates the first information. If the terminal device reports the field, it may indicate that there is a scheduling limitation or that receiving and sending cannot be performed at the same time. If the terminal device does not report the field, it may indicate that there is no scheduling limitation or that receiving and sending can be performed at the same time.

It should be noted that, the terminal device may dynamically report the first information to the access network device. To be specific, when the terminal device receives an RRC reconfiguration message from the access network device, the terminal device may add the first information to RRC complete information (that is, RRC complete) for the RRC reconfiguration message, and send the RRC complete information to the access network device. The RRC reconfiguration message may include the first target carrier. Therefore, if reporting is performed at a carrier granularity level, the terminal device may report only whether a carrier pair including the first target carrier and the first serving carrier has a scheduling limitation, or report whether receiving and sending can be performed at the same time on the carrier pair including the first target carrier and the first serving carrier. If reporting is performed at a band granularity level, the terminal device may report only whether a band pair including the band on which the first target carrier is located and the band on which the first serving carrier is located has a scheduling limitation, or report whether receiving and sending can be performed at the same time on the band pair including the band on which the first target carrier is located and the band on which the first serving carrier is located. If reporting is performed at a band type granularity level, the terminal device may report only whether a band type pair including the band type of the first target carrier and the band type of the first serving carrier has a scheduling limitation, or report whether receiving and sending can be performed at the same time in the band type pair including the band type of the first target carrier and the band type of the first serving carrier, or indicate, by using one bit, whether there is a scheduling limitation or a capability of performing receiving and sending at the same time.

Optionally, the terminal device may alternatively statically report the first information to the access network device. To be specific, when initially accessing the serving cell, the terminal device reports all possible carrier pair combinations, all possible band pair combinations, or all possible band type pair combinations to the access network device at a time. This is because during static reporting, for the terminal device, both the serving carrier and the target carrier are unknown. Therefore, the terminal device can only list all combinations for reporting.

It should be noted that, the foregoing is a description of a case in which the access network device sends one target carrier to the terminal device. When the access network device simultaneously delivers a plurality of target carriers, if the terminal device needs to report, to the access network device, whether receiving and sending can be performed at the same time in a combination including the first serving carrier and each of the plurality of target carriers, the access network device may report, in ascending or descending order of carrier frequencies (that is, center frequencies) of the target carriers, to the access network device, target carriers on which receiving and sending can be performed at the same time as the first serving carrier (that is, there is no scheduling limitation), and target carriers on which receiving and sending cannot be performed at the same time as the first serving carrier (that is, there is a scheduling limitation). The reported first information may include whether receiving and sending can be performed at the same time in a carrier pair including the first serving carrier and a target carrier (or whether there is a scheduling limitation), or whether receiving and sending can be performed at the same time in a band pair including the band on which the first serving carrier is located and a band on which the target carrier is located (or whether there is a scheduling limitation), or whether receiving and sending can be performed at the same time in a band type pair including the band type of the band on which the first serving carrier is located and a band type of the band on which the target carrier is located (or whether there is a scheduling limitation). Optionally, the first information may also include a bitmap (bitmap) or a plurality of bits (bits). A bit value of each bit indicates whether a carrier pair that includes the first serving carrier and a first target carrier and that corresponds to the bit has a scheduling limitation or supports receiving and sending at the same time. For example, assuming that the plurality of target carriers delivered by the access network device simultaneously are a target carrier 1, a target carrier 2, and a target carrier 3, where a carrier frequency 1 of the target carrier 1<a carrier frequency 2 of the target carrier 2<a carrier frequency 3 of the target carrier 3, the access network device may indicate, separately by using three bits, whether receiving and sending can be performed at the same time in a carrier pair including the serving carrier and each target carrier or whether the carrier pair has a scheduling limitation. For example, in ascending order of the carrier frequencies (that is, the center frequencies) of the target carriers, the first bit from left to right in the three bits may indicate whether receiving and sending can be performed on the serving carrier and the target carrier 1 at the same time or whether there is a scheduling limitation, the second bit indicates whether receiving and sending can be performed on the serving carrier and the target carrier 2 at the same time or whether there is a scheduling limitation, and the third bit indicates whether receiving and sending can be performed on the serving carrier and the target carrier 3 at the same time or whether there is a scheduling limitation. Therefore, after receiving the first information, the access network device may determine, based on the first information, whether a carrier pair corresponding to each bit has a scheduling limitation. Herein, an example in which a bit value 1 indicates that there is a scheduling limitation or that receiving and sending cannot be performed at the same time, and 0 indicates that there is no scheduling limitation or that receiving and sending can be performed at the same time. Assuming that the three bit values are 101, it may be determined that there is a scheduling limitation on the serving carrier and the target carrier 1, there is no scheduling limitation on the serving carrier and the target carrier 2, and there is a scheduling limitation on the serving carrier and the target carrier 3.

It should be noted that, the terminal device may alternatively not notify, by reporting the first information, the access network device of whether there is a scheduling limitation on the first serving carrier and the first target carrier, but it is specified in a standard protocol that when a type of the band to which the first serving carrier of the UE belongs and a type of the band to which the first target carrier of the UE belongs are inter-TDD-TDD bands, TDD-FDD bands, or FDD-TDD bands, a scheduling limitation is generated during measurement (that is, there is a scheduling limitation on the first serving carrier or receiving and sending cannot be performed on the first serving carrier and the first target carrier at the same time). In other words, the first band type and the second band type may be the FDD-TDD bands, the first band type and the second band type are the TDD-FDD bands, or the first band type and the second band type are the inter-TDD-TDD bands. Therefore, if the type of the band on which the first target carrier is located is the first band type, and the type of the band on which the first serving carrier is located is the second band type, it is determined that there is a scheduling limitation on the first serving carrier or that receiving and sending cannot be performed on the first serving carrier and the first target carrier at the same time, or, if the type of the band on which the first target carrier is located is the first band type, and the type of the band on which the first serving carrier is located is the second band type, the terminal device does not expect to perform transmission on the first serving carrier within the reference signal measurement time configuration window duration on the first time domain resource, or the terminal device does not expect to perform transmission on the first serving carrier on the symbols on which the measurement reference signal on the first time domain resource is located, and on the symbol previous to and the symbol next to contiguous symbols on which the measurement reference signal is located. Alternatively, it is described as that, if the type of the band on which the first target carrier is located is the first band type, and the type of the band on which the first serving carrier is located is the second band type, the access network device does not schedule the terminal device on the first serving carrier within the reference signal measurement time configuration window duration on the first time domain resource, or the access network device does not schedule the terminal device on the first serving carrier on the symbols on which the measurement reference signal on the first time domain resource is located, and on the symbol previous to and the symbol next to contiguous symbols on which the measurement reference signal is located.

It should be noted that, the scheduling limitation described in the foregoing step S301 and step S302 is a scheduling limitation in the FR 1. In other words, in the FR 1, if the UE has a capability of performing receiving and sending on the first serving carrier and the first target carrier at the same time, there is no scheduling limitation, that is, when the UE performs measurement on the first target carrier, no scheduling limitation is generated on the first serving carrier, namely, the UE may perform measurement on the first target carrier, and may receive/send data on the first serving carrier at the same time. On the contrary, if the UE does not have a capability of performing receiving and sending on the first serving carrier and the first target carrier at the same time, there is a scheduling limitation, that is, when the UE performs measurement on the first target carrier, a scheduling limitation is generated on the first serving carrier, namely, when the UE performs measurement on the first target carrier, the UE stops uplink sending on the first serving carrier.

For scheduling limitation in the FR 2, in the FR 2, if the UE supports an independent beam management (independent beam management, IBM) capability on the band on which the first serving carrier is located and the band on which the first target carrier is located, it indicates that the UE can perform independent beam scanning on the target carrier. In this case, when the UE performs measurement on the first target carrier, if the UE has a capability of performing receiving and sending on the carrier pair (that is, a carrier pair including the first serving carrier and the first target carrier) at the same time, no scheduling limitation is generated on the first serving carrier, that is, the UE may perform measurement on the first target carrier, and may receive/send data on the first serving carrier at the same time. If the UE has no capability of performing receiving and sending on the carrier pair at the same time, a scheduling limitation is generated on the first serving carrier, that is, when the UE performs measurement on the first target carrier, the UE stops uplink sending and/or downlink receiving on the first serving carrier. In the FR 2, if the UE supports a common beam management (common beam management, CBM) capability on the band on which the first serving carrier is located and the band on which the first target carrier is located, the UE needs to perform beam scanning for measurement (that is, beam scanning is to be performed on all carriers). Therefore, based on an existing scheduling limitation of the FR 2, the UE cannot perform data receiving/sending during measurement, that is, regardless of whether the UE has a capability of performing receiving and sending on the carrier pair at the same time, a scheduling limitation is generated during CBM. To be specific, during CBM, when performing measurement on the first target carrier, the UE stops uplink sending and/or downlink receiving on the first serving carrier. It should be noted that, the foregoing related descriptions of the scheduling limitation in the FR 2 are described by using a carrier pair as an example. Optionally, the carrier pair may alternatively be a band pair, or a band type pair. This is not limited herein. In other words, for the band pair, in the FR 2, if the UE supports the IBM capability on the band on which the first serving carrier is located and the band on which the first target carrier is located, it indicates that the UE can perform independent beam scanning on the target carrier. In this case, when the UE performs measurement on the first target carrier, if the UE has a capability of performing receiving and sending on the band pair (that is, a band pair including the band on which the first serving carrier is located and the band on which the first target carrier is located) at the same time, no scheduling limitation is generated on the first serving carrier. If the UE has no capability of performing receiving and sending on the band pair at the same time, a scheduling limitation is generated on the first serving carrier. In the FR 2, if the UE supports the CBM capability on the band on which the first serving carrier is located and the band on which the first target carrier is located, the UE needs to perform beam scanning for measurement (that is, beam scanning is to be performed on all carries). Therefore, based on the existing scheduling limitation of the FR 2, the UE cannot perform data receiving/sending during measurement, that is, regardless of whether the UE has a capability of performing receiving and sending on the band pair at the same time, a scheduling limitation is generated during CBM. To be specific, during CBM, when performing measurement on the first target carrier, the UE stops uplink sending and/or downlink receiving on the first serving carrier. For the band type pair, in the FR 2, if the UE supports the IBM capability on the band on which the first serving carrier is located and the band on which the first target carrier is located, it indicates that the UE can perform independent beam scanning on the target carrier. In this case, when the UE performs measurement on the first target carrier, if the UE has a capability of performing receiving and sending on the band type pair (that is, a band type pair including the band type of the band on which the first serving carrier is located and the band type of the band on which the first target carrier is located) at the same time, no scheduling limitation is generated on the first serving carrier. If the UE has no capability of performing receiving and sending on the band type pair at the same time, a scheduling limitation is generated on the first serving carrier. In the FR 2, if the UE supports the CBM capability on the band on which the first serving carrier is located and the band on which the first target carrier is located, the UE needs to perform beam scanning for measurement (that is, beam scanning is to be performed on all carries). Therefore, based on the existing scheduling limitation of the FR 2, the UE cannot perform data receiving/sending during measurement, that is, regardless of whether the UE has a capability of performing receiving and sending on the band type pair at the same time, a scheduling limitation is generated during CBM. To be specific, during CBM, when performing measurement on the first target carrier, the UE stops uplink sending and/or downlink receiving on the first serving carrier. Uplink sending may be understood as that the terminal device sends a PUCCH, the terminal device sends a PUSCH, the terminal device sends an uplink SRS, or the like. This is not limited herein. Downlink receiving may be understood as that the terminal device receives a PDSCH, the terminal device receives an EPDCCH, the terminal device receives a PDCCH, the terminal device receives a TRS, the terminal device receives a CSI-RS for CQI, or the like. This is not limited herein.

In this embodiment of this application, when the first target carrier and the first serving carrier belong to different bands (for example, the first target carrier and the first serving carrier are the inter-TDD-TDD bands, the TDD-FDD bands, or the FDD-TDD bands), if there is a scheduling limitation on the first serving carrier, the terminal device does not expect to perform transmission on the first serving carrier within the reference signal measurement time configuration window duration on the first time domain resource, or the terminal device does not expect to perform transmission on the first serving carrier on the symbols on which the measurement reference signal on the first time domain resource is located, and on the symbol previous to and the symbol next to the contiguous symbols on which the measurement reference signal is located. In this application, the scheduling limitation during measurement is defined, so as to avoid a case in which the access network device schedules the terminal device at a moment at which the terminal device performs downlink measurement and cannot be scheduled, thereby improving communication reliability.

FIG. 6 is another schematic flowchart of a communication method according to an embodiment of this application. As shown in FIG. 6, the method includes the following step S601 and step S602. The method shown in FIG. 6 may be performed by an access network device, or the method shown in FIG. 6 may be performed by a chip in the access network device, or the like. This is not limited herein. For ease of description, the following uses an access network device as an example for description. It should be noted that, this embodiment of this application is applicable to a scenario in which a band on which a serving carrier is located and a band on which a target carrier is located are a same TDD band in the need for gap solution and the NCSG solution.

S601: The access network device sends first configuration information to a terminal device, where the first configuration information is used to determine a first time domain resource used by the terminal device to measure a first target carrier, the first time domain resource is reference signal measurement time configuration window duration, or the first time domain resource is a measurement length ML.

In some feasible implementations, the access network device sends the first configuration information to the terminal device. The first configuration information is used to determine the first time domain resource used by the terminal device to measure the first target carrier. In other words, after receiving the first configuration information from the access network device, the terminal device may determine, based on the first configuration information, a time domain resource for measuring the first target carrier, namely, the first time domain resource. The first time domain resource may be the reference signal measurement time configuration window duration, or the first time domain resource may be the ML. It should be noted that, when a measurement reference signal is an SSB used for measurement, the reference signal measurement time configuration window duration may be SSB-based measurement timing configuration (SSB-based measurement timing configuration, SMTC) window duration; or when the measurement reference signal is a CSI-RS used for measurement, the reference signal measurement time configuration window duration may be CSI-RS-based measurement timing configuration window duration. This is not limited herein. For ease of description, in the following embodiments of this application, an example in which the reference signal measurement time configuration window duration is the SMTC window duration is used for description.

It should be noted that, (T) in the need for gap solution, the first configuration information may be SMTC parameters, where the SMTC parameters may include information such as a period and an offset of an SMTC window, and a length of the SMTC window. Therefore, after receiving the SMTC parameters from the access network device, the terminal device may determine the corresponding SMTC window duration based on the SMTC parameters, so that the terminal device can perform SSB measurement and normally receive and send data within the SMTC window duration configured by the access network device. In other words, in the need for gap solution, the SMTC parameters define an occasion on which the terminal device simultaneously performs measurement and normally receives and sends data. CD In the NCSG solution, the first configuration information may be NCSG parameters, where the NCSG parameters may include information such as a visible interrupt length (visible interruption length, VIL), a visible interrupt repetition period (visible interruption repetition period, VIRP), and an ML. Therefore, after receiving the NCSG parameters from the access network device, the terminal device may determine the ML based on the NCSG parameters, so that the terminal device can perform SSB measurement and normally receive and send data in the ML configured by the access network device. In other words, in the NCSG solution, the NCSG parameters may define an occasion on which the terminal device simultaneously performs measurement and normally receives and sends data. For ease of description, in this embodiment of this application, the reference signal measurement time configuration window duration and the ML may be collectively referred to as the first time domain resource.

It should be noted that, in a handover scenario, when signal quality of UE in a current serving cell is relatively poor, if the UE needs to be handed over to another neighboring cell (a neighboring cell for short) with relatively good signal quality in a timely manner, the UE may measure a carrier on which the neighboring cell is located, so as to perform handover based on a measurement result. In other words, the first target carrier in this embodiment of this application may be a carrier or the like on which the neighboring cell of the serving cell is located. This is specifically determined based on an actual application scenario, and is not limited herein. Generally, the first target carrier is delivered by the access network device to the terminal device. Therefore, after receiving the first target carrier from the access network device and determining the first time domain resource based on the first configuration information, the terminal device may receive a measurement reference signal on the first target carrier and the first time domain resource, to measure a radio channel between the terminal device and the access network device and a related transmission condition based on the measurement reference signal. For example, in a handover scenario, the access network device may send radio resource control (radio resource control, RRC) reconfiguration information to the terminal device, where the RRC reconfiguration information includes the first target carrier. The RRC reconfiguration information may include at least one first target carrier. For ease of understanding, one first target carrier is used as an example for description in this application.

It should be noted that, the first target carrier and the first serving carrier belong to a same time division duplex band, namely, a time division duplex band with a same band number. Specifically, the time division duplex band may be an intra-frequency time division duplex band or an inter-frequency time division duplex band. In other words, the first serving carrier and the first target carrier may be intra-frequency and on a same time division duplex band, or the first serving carrier and the first target carrier may be inter-frequency but on a same time division duplex band.

S602: When the first target carrier and the first serving carrier belong to a same time division duplex band, and there is a scheduling limitation on the first serving carrier or receiving and sending cannot be performed on the first serving carrier and the first target carrier at the same time, the access network device does not schedule the terminal device on the first serving carrier within the reference signal measurement time configuration window duration on the first time domain resource, or the access network device does not schedule the terminal device on the first serving carrier on symbols on which a measurement reference signal on the first time domain resource is located, and on a symbol previous to and a symbol next to contiguous symbols on which the measurement reference signal is located.

In some feasible implementations, from the side of the access network device, when the access network device determines that there is a scheduling limitation on the first serving carrier or that receiving and sending cannot be performed on the first serving carrier and the first target carrier at the same time, the access network device does not schedule the terminal device on the first serving carrier within the reference signal measurement time configuration window duration on the first time domain resource. Alternatively, when the access network device determines that there is a scheduling limitation on the first serving carrier or that receiving and sending cannot be performed on the first serving carrier and the first target carrier at the same time, the access network device does not schedule the terminal device on the first serving carrier on the symbols on which the measurement reference signal on the first time domain resource is located, and on the symbol previous to and the symbol next to the contiguous symbols on which the measurement reference signal is located.

Correspondingly, from the side of the terminal device, when there is a scheduling limitation on the first serving carrier or receiving and sending cannot be performed on the first serving carrier and the first target carrier at the same time, the terminal device does not expect to perform transmission on the first serving carrier within the reference signal measurement time configuration window duration on the first time domain resource. Alternatively, when there is a scheduling limitation on the first serving carrier or receiving and sending cannot be performed on the first serving carrier and the first target carrier at the same time, the terminal device does not expect to perform transmission on the first serving carrier on the symbols on which the measurement reference signal on the first time domain resource is located, and on the symbol previous to and the symbol next to the contiguous symbols on which the measurement reference signal is located.

That receiving and sending cannot be performed on the first serving carrier and the first target carrier at the same time may be understood as follows: The terminal device cannot perform uplink sending and/or downlink receiving on the first serving carrier when receiving a downlink measurement reference signal on the first target carrier. To be specific, the terminal device cannot perform uplink sending and/or downlink receiving on the first serving carrier when performing measurement on the first target carrier. Uplink sending may be understood as that the terminal device sends a physical uplink control channel (physical uplink control channel, PUCCH), the terminal device sends a physical uplink shared channel (physical uplink shared channel, PUSCH), the terminal device sends an uplink sounding reference signal (sounding reference signal, SRS), or the like. This is not limited herein. Downlink receiving may be understood as that the terminal device receives a physical downlink shared channel (physical downlink shared channel, PDSCH), the terminal device receives a physical downlink control channel (enhanced physical downlink control channel, EPDCCH), the terminal device receives an enhanced physical downlink control channel (enhanced physical downlink control channel, EPDCCH), the terminal device receives a tracking reference signal (tracking reference signal, TRS), or the like. This is not limited herein. In other words, the terminal device can select only one of measurement and data receiving and sending, or the terminal device cannot perform measurement and data receiving and sending at the same time. In this embodiment of this application, only an example in which measurement is preferentially performed is used for description.

It should be noted that, in this embodiment of this application, the meaning of "receiving and sending cannot be performed on the first serving carrier and the first target carrier at the same time" is the same as the meaning of "there is a scheduling limitation on a first serving carrier". The two different descriptions may be interchanged, and this is not limited herein. Correspondingly, the meaning of "receiving and sending can be performed on the first serving carrier and the first target carrier at the same time" is the same as the meaning of "there is no scheduling limitation on a first serving carrier". The two different descriptions may also be interchanged, and this is not limited herein. In other words, when the terminal device cannot perform receiving and sending on the first serving carrier and the first target carrier at the same time, it is equivalent to that there is a scheduling limitation on the serving carrier. Therefore, when performing measurement on the first target carrier, the terminal device stops performing uplink sending on the first serving carrier. When the terminal device can perform receiving and sending on the first serving carrier and the first target carrier at the same time, it is equivalent to that there is no scheduling limitation on the serving carrier. Therefore, the terminal device may perform measurement on the first serving carrier, and may also receive/send data on the first serving carrier at the same time.

From the side of the access network device, that the access network device does not schedule the terminal device when there is a scheduling limitation on the first serving carrier or receiving and sending cannot be performed on the first serving carrier and the first target carrier at the same time may be understood as follows: The access network device does not allocate, to the terminal device, a resource used for uplink sending and/or downlink receiving, where the resource includes a time domain resource and/or a frequency domain resource. For example, the time domain resource may be the reference signal measurement time configuration window duration in this embodiment of this application, or the time domain resource may be the symbols on which the measurement reference signal is located, and the symbol previous to and the symbol next to the contiguous symbols on which the measurement reference signal is located; and the frequency domain resource may be the first target carrier, or the like in this embodiment of this application. This is not limited herein. Generally, for uplink sending, the access network device may allocate, to the terminal device in a dynamic or semi-static manner, a resource used for uplink sending. For example, if the dynamic manner is used, the access network device may send downlink control information (downlink control information, DCI) to the terminal device, to allocate, to the terminal device, the resource used for uplink sending. If the semi-static manner is used, the access network device may send RRC signaling to the terminal device, to allocate, to the terminal device, the resource used for uplink sending. For downlink receiving, the access network device may allocate, to the terminal device in a dynamic manner, a resource used for downlink receiving. For example, the access network device may send DCI to the terminal device, to allocate, to the terminal device, the resource used for downlink receiving. Uplink sending may be understood as that the terminal device sends a PUCCH, the terminal device sends a PUSCH, the terminal device sends an SRS, or the like. This is not limited herein. Downlink receiving may be understood as that the terminal device receives a PDSCH, the terminal device receives an EPDCCH, the terminal device receives a PDCCH, the terminal device receives a TRS, the terminal device receives a CSI-RS for CQI, or the like. This is not limited herein.

Correspondingly, from the side of the terminal device, that when there is a scheduling limitation on the first serving carrier or receiving and sending cannot be performed on the first serving carrier and the first target carrier at the same time, the terminal device does not expect to perform transmission on the first serving carrier within the reference signal measurement time configuration window duration on the first time domain resource; or the terminal device does not expect to perform transmission on the first serving carrier on the symbols on which the measurement reference signal on the first time domain resource is located, and on the symbol previous to and the symbol next to the contiguous symbols on which the measurement reference signal is located may be understood as follows: The terminal device does not expect to perform uplink sending and/or downlink receiving on the first serving carrier within the reference signal measurement time configuration window duration on the first time domain resource; or the terminal device does not expect to perform uplink sending and/or downlink receiving on the first serving carrier on the symbols on which the measurement reference signal on the first time domain resource is located, and on the symbol previous to and the symbol next to the contiguous symbols on which the measurement reference signal is located. Uplink sending may be understood as that the terminal device sends a PUCCH, the terminal device sends a PUSCH, the terminal device sends an SRS, or the like. This is not limited herein. Downlink receiving may be understood as that the terminal device receives a PDSCH, the terminal device receives an EPDCCH, the terminal device receives a PDCCH, the terminal device receives a TRS, the terminal device receives a CSI-RS for CQI, or the like. This is not limited herein.

A downlink measurement reference signal in this embodiment of this application may include an SSB or the like. This is not limited herein. For ease of description, only an SSB is used as an example for description in this embodiment of this application. Generally, the SSB needs to occupy four contiguous symbols. Therefore, for explanations of the symbols on which the measurement reference signal on the first time domain resource is located, and the symbol previous to and the symbol next to the contiguous symbols on which the measurement reference signal is located, refer to the descriptions of the schematic diagrams shown in FIG. 4 and FIG. 5.

In this embodiment of this application, when the first target carrier and the first serving carrier belong to a same time division duplex band, if there is a scheduling limitation on the first serving carrier, that is, receiving of a to-be-measured measurement reference signal and normal data receiving and sending cannot be performed at the same time during measurement, the terminal device does not expect to perform transmission on the first serving carrier within the reference signal measurement time configuration window duration on the first time domain resource, or the terminal device does not expect to perform transmission on the first serving carrier on the symbols on which the measurement reference signal on the first time domain resource is located, and on the symbol previous to and the symbol next to the contiguous symbols on which the measurement reference signal is located. In this application, the scheduling limitation during measurement is defined, so as to avoid a case in which the access network device schedules the terminal device at a moment at which the terminal device performs downlink measurement and cannot be scheduled, thereby improving communication reliability.

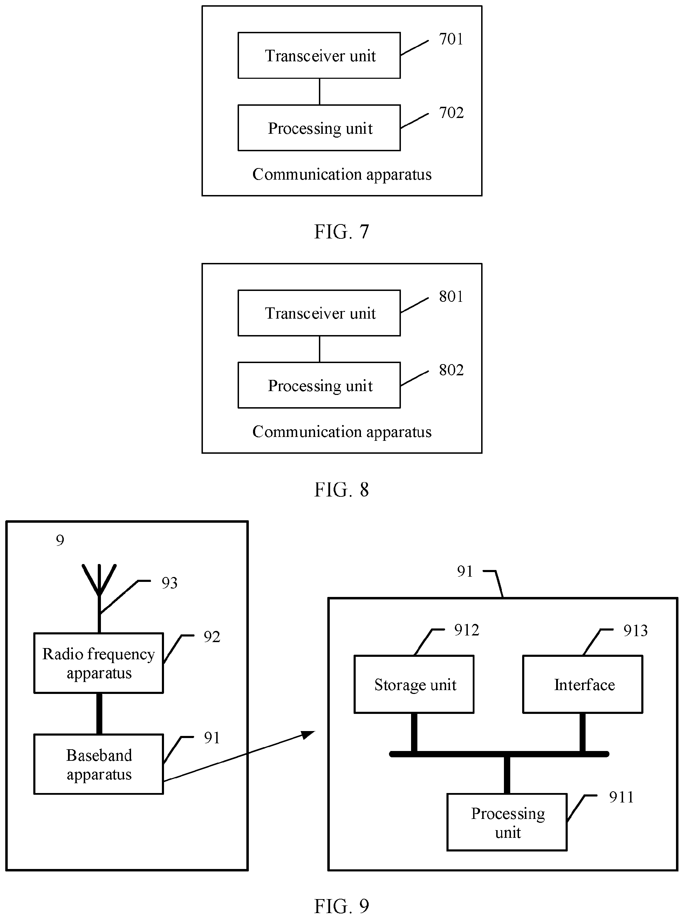

With reference to FIG. 7 to FIG. 10, the following describes, in detail, communication apparatuses provided in this application.

FIG. 7 is a schematic diagram of a structure of a communication apparatus according to an embodiment of this application. The communication apparatus shown in FIG. 7 may be used for performing some or all functions of the access network device in the method embodiments described in FIG. 3 to FIG. 6. The apparatus may be the access network device, an apparatus in the access network device, or an apparatus that can be used together with the access network device. The communication apparatus may alternatively be a chip system. The communication apparatus shown in FIG. 7 may include a transceiver unit 701 and a processing unit 702. The processing unit 702 is configured to process data. The transceiver unit 701 is integrated with a receiving unit and a sending unit. The transceiver unit 701 may also be referred to as a communication unit. Alternatively, the transceiver unit 701 may be split into a receiving unit and sending unit. The processing unit 702 below is similar to the transceiver unit 701, and details are not described again below.

In an implementation, the transceiver unit 701 is configured to send first configuration information to a terminal device, where the first configuration information is used to determine a first time domain resource used by the terminal device to measure a first target carrier; and
the processing unit 702 is configured to: when there is a scheduling limitation on a first serving carrier or receiving and sending cannot be performed on the first serving carrier and the first target carrier at the same time, skip scheduling the terminal device on the first serving carrier within the reference signal measurement time configuration window duration on the first time domain resource; or
the processing unit 702 is configured to: when there is a scheduling limitation on the first serving carrier or receiving and sending cannot be performed on the first serving carrier and the first target carrier at the same time, skip scheduling the terminal device on the first serving carrier on symbols on which a measurement reference signal on the first time domain resource is located, and on a symbol previous to and a symbol next to contiguous symbols on which the measurement reference signal is located, where
the first target carrier and the first serving carrier belong to different bands.

Optionally, the first time domain resource is the reference signal measurement time configuration window duration, or the first time domain resource is a measurement length ML.

Optionally, the transceiver unit 701 is further configured to send first information to the access network device, where the first information indicates that there is a scheduling limitation on the first serving carrier; or indicates that receiving and sending cannot be performed on the first serving carrier and the first target carrier at the same time.

Optionally, the first information includes at least one carrier pair on which there is a scheduling limitation or receiving and sending cannot be performed on the first serving carrier and the first target carrier at the same time, where one carrier pair includes one first carrier and one second carrier, and the first target carrier and the first serving carrier are included in one of the at least one carrier pair.

Optionally, the first information includes at least one carrier pair on which there is no scheduling limitation or receiving and sending can be performed on the first serving carrier and the first target carrier at the same time, where one carrier pair includes one first carrier and one second carrier, and the first target carrier and the first serving carrier are not included in any of the at least one carrier pair.

Optionally, the first information includes at least one band pair on which there is a scheduling limitation or receiving and sending cannot be performed on the first serving carrier and the first target carrier at the same time, where one band pair includes one first band and one second band, and a band on which the first target carrier is located and a band on which the first serving carrier is located are included in one of the at least one band pair.

Optionally, the first information includes at least one band pair on which there is no scheduling limitation, one band pair includes one first band and one second band, and a band on which the first target carrier is located and a band on which the first serving carrier is located are not included in any of the at least one band pair.

Optionally, a type of the first band and a type of the second band are respectively a frequency division duplex band and a time division duplex band; or
a type of the first band and a type of the second band are respectively a time division duplex band and a frequency division duplex band; or
the first band and the second band are different time division duplex bands.

Optionally, the first information includes at least one band type pair on which there is a scheduling limitation or receiving and sending cannot be performed on the first serving carrier and the first target carrier at the same time, one band type pair includes one first band type and one second band type, and a type of a band to which the first target carrier belongs and a type of a band to which the first serving carrier belongs are included in one of the at least one band type pair.

Optionally, the first information includes a resource combination on which there is a scheduling limitation; or the first information includes a resource combination on which receiving and sending cannot be performed on the first serving carrier and the first target carrier at the same time; and
the resource combination includes a first carrier and a second band, the first carrier includes the first serving carrier, and the second band includes a band on which the first target carrier is located.

Optionally, the first information includes a resource combination on which there is a scheduling limitation; or the first information includes a resource combination on which receiving and sending cannot be performed on the first serving carrier and the first target carrier at the same time; and
the resource combination includes cell identity information and a second band, the cell identity information includes identity information of a first serving cell, the second band includes a band on which the first target carrier is located, and a carrier on which the first serving cell is located is the first serving carrier.

Optionally, the first information includes a resource combination on which there is no scheduling limitation; or the first information includes a resource combination on which receiving and sending can be performed on the first serving carrier and the first target carrier at the same time; and
the resource combination includes a first carrier and a second band, the first carrier does not include the first serving carrier, and the second band does not include a band on which the first target carrier is located.

Optionally, the first information includes a resource combination on which there is no scheduling limitation; or the first information includes a resource combination on which receiving and sending can be performed on the first serving carrier and the first target carrier at the same time; and
the resource combination includes cell identity information and a second band, the cell identity information does not include identity information of a first serving cell, the second band does not include a band on which the first target carrier is located, and a carrier on which the first serving cell is located is the first serving carrier.

Optionally, the first information includes a resource combination on which there is a scheduling limitation; or the first information includes a resource combination on which receiving and sending cannot be performed on the first serving carrier and the first target carrier at the same time; and
the resource combination includes cell identity information and a second carrier, the cell identity information includes identity information of a first serving cell, the second carrier includes the first target carrier, and a carrier on which the first serving cell is located is the first serving carrier.

Optionally, the first information includes a resource combination on which there is no scheduling limitation; or the first information includes a resource combination on which receiving and sending can be performed on the first serving carrier and the first target carrier at the same time; and
the resource combination includes cell identity information and a second carrier, the cell identity information does not include identity information of a first serving cell, the second carrier does not include the first target carrier, and a carrier on which the first serving cell is located is the first serving carrier.

Optionally, the apparatus further includes:
a processing unit 702, configured to: if it is determined that a type of a band to which the first target carrier belongs is a first band type, and a type of a band to which the first serving carrier belongs is a second band type, determine that there is a scheduling limitation on the first serving carrier or that receiving and sending cannot be performed on the first serving carrier and the first target carrier at the same time.

For another possible implementation of the communication apparatus, refer to related descriptions of functions of the access network device in the method embodiments corresponding to FIG. 3 to FIG. 6. Details are not described herein again.

FIG. 8 is a schematic diagram of a structure of another communication apparatus according to an embodiment of this application. The communication apparatus shown in FIG. 8 may be used for performing some or all functions of the terminal device in the method embodiments described in FIG. 3 to FIG. 6. The apparatus may be a terminal device, an apparatus in the terminal device, or an apparatus that can be used together with the terminal device. The communication apparatus may alternatively be a chip system. The communication apparatus shown in FIG. 8 may include a transceiver unit 801 and a processing unit 802.

In an implementation, the processing unit 802 is configured to receive first configuration information from an access network device, where the first configuration information is used to determine a first time domain resource used by the terminal device to measure a first target carrier, where
when there is a scheduling limitation on a first serving carrier or receiving and sending cannot be performed on the first serving carrier and the first target carrier at the same time, the terminal device does not expect to perform transmission on the first serving carrier within the reference signal measurement time configuration window duration on the first time domain resource; or
when there is a scheduling limitation on a first serving carrier or receiving and sending cannot be performed on the first serving carrier and the first target carrier at the same time, the terminal device does not expect to perform transmission on the first serving carrier on symbols on which a measurement reference signal on the first time domain resource is located, and on a symbol previous to and a symbol next to contiguous symbols on which the measurement reference signal is located, where
the first target carrier and the first serving carrier belong to different bands.

Optionally, the first time domain resource is the reference signal measurement time configuration window duration, or the first time domain resource is a measurement length ML.

Optionally, the transceiver unit 801 is further configured to send first information to the access network device, where the first information indicates that there is a scheduling limitation on the first serving carrier; or indicates that receiving and sending cannot be performed on the first serving carrier and the first target carrier at the same time.

Optionally, the first information includes at least one carrier pair on which there is a scheduling limitation or receiving and sending cannot be performed on the first serving carrier and the first target carrier at the same time, where one carrier pair includes one first carrier and one second carrier, and the first target carrier and the first serving carrier are included in one of the at least one carrier pair.

Optionally, the first information includes at least one carrier pair on which there is no scheduling limitation or receiving and sending can be performed on the first serving carrier and the first target carrier at the same time, where one carrier pair includes one first carrier and one second carrier, and the first target carrier and the first serving carrier are not included in any of the at least one carrier pair.

Optionally, the first information includes at least one band pair on which there is a scheduling limitation or receiving and sending cannot be performed on the first serving carrier and the first target carrier at the same time, where one band pair includes one first band and one second band, and a band on which the first target carrier is located and a band on which the first serving carrier is located are included in one of the at least one band pair.

Optionally, the first information includes at least one band pair on which there is no scheduling limitation, one band pair includes one first band and one second band, and a band on which the first target carrier is located and a band on which the first serving carrier is located are not included in any of the at least one band pair.

Optionally, a type of the first band and a type of the second band are respectively a frequency division duplex band and a time division duplex band; or
a type of the first band and a type of the second band are respectively a time division duplex band and a frequency division duplex band; or
the first band and the second band are different time division duplex bands.

Optionally, the first information includes at least one band type pair on which there is a scheduling limitation or receiving and sending cannot be performed on the first serving carrier and the first target carrier at the same time, one band type pair includes one first band type and one second band type, and a type of a band to which the first target carrier belongs and a type of a band to which the first serving carrier belongs are included in one of the at least one band type pair.

Optionally, the first information includes a resource combination on which there is a scheduling limitation; or the first information includes a resource combination on which receiving and sending cannot be performed on the first serving carrier and the first target carrier at the same time; and
the resource combination includes a first carrier and a second band, the first carrier includes the first serving carrier, and the second band includes a band on which the first target carrier is located.

Optionally, the first information includes a resource combination on which there is a scheduling limitation; or the first information includes a resource combination on which receiving and sending cannot be performed on the first serving carrier and the first target carrier at the same time; and
the resource combination includes cell identity information and a second band, the cell identity information includes identity information of a first serving cell, the second band includes a band on which the first target carrier is located, and a carrier on which the first serving cell is located is the first serving carrier.

Optionally, the first information includes a resource combination on which there is no scheduling limitation; or the first information includes a resource combination on which receiving and sending can be performed on the first serving carrier and the first target carrier at the same time; and
the resource combination includes a first carrier and a second band, the first carrier does not include the first serving carrier, and the second band does not include a band on which the first target carrier is located.

Optionally, the first information includes a resource combination on which there is no scheduling limitation; or the first information includes a resource combination on which receiving and sending can be performed on the first serving carrier and the first target carrier at the same time; and
the resource combination includes cell identity information and a second band, the cell identity information does not include identity information of a first serving cell, the second band does not include a band on which the first target carrier is located, and a carrier on which the first serving cell is located is the first serving carrier.

Optionally, the first information includes a resource combination on which there is a scheduling limitation; or the first information includes a resource combination on which receiving and sending cannot be performed on the first serving carrier and the first target carrier at the same time; and
the resource combination includes cell identity information and a second carrier, the cell identity information includes identity information of a first serving cell, the second carrier includes the first target carrier, and a carrier on which the first serving cell is located is the first serving carrier.

Optionally, the first information includes a resource combination on which there is no scheduling limitation; or the first information includes a resource combination on which receiving and sending can be performed on the first serving carrier and the first target carrier at the same time; and
the resource combination includes cell identity information and a second carrier, the cell identity information does not include identity information of a first serving cell, the second carrier does not include the first target carrier, and a carrier on which the first serving cell is located is the first serving carrier.

Optionally, the processing unit 802 is further configured to: if it is determined that a type of a band to which the first target carrier belongs is a first band type, and a type of a band to which the first serving carrier belongs is a second band type, determine that there is a scheduling limitation on the first serving carrier or that receiving and sending cannot be performed on the first serving carrier and the first target carrier at the same time.

For another possible implementation of the communication apparatus, refer to related descriptions of functions of the access network device in the method embodiments corresponding to FIG. 3 to FIG. 6. Details are not described herein again.

FIG. 9 is a schematic diagram of a structure of another communication apparatus according to an embodiment of this application. As shown in FIG. 9, the communication apparatus may be the access network device described in embodiments of this application, and is used for implementing the functions of the access network device in FIG. 3 to FIG. 6. The access network device 9 includes: a baseband apparatus 91, a radio frequency apparatus 92, and an antenna 93. In an uplink direction, the radio frequency apparatus 92 receives, by using the antenna 93, information sent by a terminal device, and sends, to the baseband apparatus 91 for processing, the information sent by the terminal device. In a downlink direction, the baseband apparatus 91 processes the information of the terminal device, and sends the processed information to the radio frequency apparatus 92. The radio frequency apparatus 92 processes the information of the terminal device, and then sends the processed information to the terminal device by using the antenna 93.

The baseband apparatus 91 includes one or more processing units 911, a storage unit 912, and an interface 913. The processing unit 911 is configured to support the access network device in performing the functions of the access network device in the foregoing method embodiments. The storage unit 912 is configured to store a software program and/or data. The interface 913 is configured to exchange information with the radio frequency apparatus 92, and the interface includes an interface circuit, configured to input and output information. In an implementation, the processing unit is an integrated circuit, for example, one or more ASICs, one or more DSPs, one or more FPGAs, or a combination of these integrated circuits. These integrated circuits may be integrated together to form a chip. The storage unit 912 may be located in a same chip as the processing unit 911, that is, an on-chip storage element. Alternatively, the storage unit 912 may be located in a chip different from the processing unit 911, that is, an off-chip storage element. The storage unit 912 may be one memory, or may be a general term of a plurality of memories or storage elements.

The access network device may implement some or all of the steps in the foregoing method embodiments in a form of scheduling a program by using one or more processing units. For example, corresponding functions of the access network device in FIG. 3 and FIG. 6 are implemented. The one or more processing units may support radio access technologies of a same standard, or may support radio access technologies of different standards.

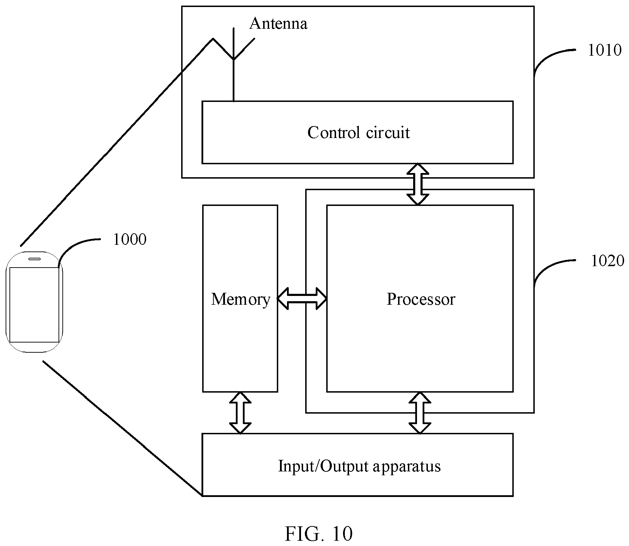

FIG. 10 is a schematic diagram of a structure of another communication apparatus according to an embodiment of this application. As shown in FIG. 10, the communication apparatus may be the terminal device described in embodiments of this application, and is used for implementing functions of the terminal device in FIG. 3 to FIG. 6. For ease of description, FIG. 10 shows only main components of a terminal device 1000. As shown in FIG. 10, the terminal device 1000 includes a processor, a memory, a control circuit, an antenna, and an input/output apparatus. The processor is mainly configured to: process a communication protocol and communication data, control the entire terminal device 1000, execute a software program, and process data of the software program. The memory is mainly configured to store the software program and the data. The control circuit is mainly configured to: perform conversion between a baseband signal and a radio frequency signal, and process the radio frequency signal. The antenna is mainly configured to receive and send radio frequency signals in a form of an electromagnetic wave. The input/output apparatus, such as a touchscreen, a display, a microphone, or a keyboard, is mainly configured to: receive data input by a user and output data to the user.

For example, the terminal device 1000 is a mobile phone. After the terminal device 1000 is powered on, the processor may read a software program in a storage unit, explain and execute instructions of the software program, and process data of the software program. When data needs to be sent wirelessly, after performing baseband processing on the to-be-sent data, the processor outputs a baseband signal to the control circuit, and after performing radio frequency processing on the baseband signal, the control circuit sends a radio frequency signal in a form of an electromagnetic wave through the antenna. When data is sent to the terminal device 1000, the control circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 10 shows only one memory and only one processor. In some embodiments, the terminal device 1000 may include a plurality of processors and a plurality of memories. The memory may also be referred to as a storage medium, a storage device, or the like. This is not limited in this embodiment of this application.

In an optional implementation, the processor may include a baseband processor and a central processing unit. The baseband processor is mainly configured to process a communication protocol and communication data, and the central processing unit is mainly configured to: control the entire terminal device 1000, execute a software program, and process data of the software program. The processor in FIG. 10 integrates functions of the baseband processor and the central processing unit. A person skilled in the art may understand that the baseband processor and the central processing unit may alternatively be processors independent of each other, and are connected to each other by using a technology such as a bus. The terminal device 1000 may include a plurality of baseband processors to adapt to different network standards, the terminal device 1000 may include a plurality of central processing units to enhance a processing capability of the terminal device 1000, and components of the terminal device 1000 may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a transceiver function may be considered as a transceiver unit 1010 of the terminal device 1000, and the processor that has a processing function may be considered as a processing unit 1020 of the terminal device 1000. As shown in FIG. 10, the terminal device 1000 includes the transceiver unit 1010 and the processing unit 1020. The transceiver unit may also be referred to as a transceiver, a transceiver machine, a transceiver apparatus, or the like. Optionally, a component that is configured to implement a receiving function and that is in the transceiver unit 1010 may be considered as a receiving unit, and a component that is configured to implement a sending function and that is in the transceiver unit 1010 may be considered as a sending unit. To be specific, the transceiver unit 1010 includes the receiving unit and the sending unit. For example, the receiving unit may also be referred to as a receiver machine, a receiver, a receiver circuit, or the like, and the sending unit may be referred to as a transmitter machine, a transmitter, a transmitter circuit, or the like.

An embodiment of this application further provides a computer-readable storage medium. The computer-readable storage medium stores instructions. When the instructions are run on a processor, method procedures in the foregoing method embodiments are implemented.

An embodiment of this application further provides a computer program product. When the computer program product is run on a processor, method procedures in the foregoing method embodiments are implemented.

A person of ordinary skill in the art may be aware that, units and steps in the examples described with reference to embodiments disclosed in this specification can be implemented in a form of electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiments are merely examples. For example, the division into units is merely logical function division. The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing computer-readable storage medium may be any usable medium that can be accessed by a computer. The following is used as an example but is not used as a limitation: The computer-readable medium may include: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage or magnetic disk storage medium, or another magnetic storage device, or any other medium that can be used to carry or store expected program code in a form of an instruction or a data structure and that can be accessed by the computer. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method is applicable to a terminal device, and comprises:
receiving first configuration information from an access network device, wherein the first configuration information is used to determine a first time domain resource used by the terminal device to measure a first target carrier; and
when there is a scheduling limitation on a first serving carrier or receiving and sending cannot be performed on the first serving carrier and the first target carrier at the same time, skipping, by the terminal device, expecting to perform transmission on the first serving carrier within reference signal measurement time configuration window duration on the first time domain resource; or
when there is a scheduling limitation on a first serving carrier or receiving and sending cannot be performed on the first serving carrier and the first target carrier at the same time, skipping, by the terminal device, expecting to perform transmission on the first serving carrier on symbols on which a measurement reference signal on the first time domain resource is located, and on a symbol previous to and a symbol next to contiguous symbols on which the measurement reference signal is located, wherein
the first target carrier and the first serving carrier belong to different bands.

2. The method according to claim 1, wherein the first time domain resource is the reference signal measurement time configuration window duration; or the first time domain resource is a measurement length ML.

3. The method according to claim 1 or 2, wherein the method further comprises:
sending first information to the access network device, wherein the first information indicates that there is a scheduling limitation on the first serving carrier; or indicates that receiving and sending cannot be performed on the first serving carrier and the first target carrier at the same time.

4. The method according to claim 3, wherein the first information comprises at least one carrier pair on which there is a scheduling limitation or receiving and sending cannot be performed on the first serving carrier and the first target carrier at the same time, wherein one carrier pair comprises one first carrier and one second carrier, and the first target carrier and the first serving carrier are comprised in one of the at least one carrier pair.

5. The method according to claim 3, wherein the first information comprises at least one carrier pair on which there is no scheduling limitation or receiving and sending can be performed on the first serving carrier and the first target carrier at the same time, wherein one carrier pair comprises one first carrier and one second carrier, and the first target carrier and the first serving carrier are not comprised in any of the at least one carrier pair.

6. The method according to claim 3, wherein the first information comprises at least one band pair on which there is a scheduling limitation or receiving and sending cannot be performed on the first serving carrier and the first target carrier at the same time, wherein one band pair comprises one first band and one second band, and a band on which the first target carrier is located and a band on which the first serving carrier is located are comprised in one of the at least one band pair.

7. The method according to claim 3, wherein the first information comprises at least one band pair on which there is no scheduling limitation, one band pair comprises one first band and one second band, and a band on which the first target carrier is located and a band on which the first serving carrier is located are not comprised in any of the at least one band pair.

8. The method according to claim 6 or 7, wherein a type of the first band and a type of the second band are respectively a frequency division duplex band and a time division duplex band; or
a type of the first band and a type of the second band are respectively a time division duplex band and a frequency division duplex band; or
the first band and the second band are different time division duplex bands.

9. The method according to claim 3, wherein the first information comprises at least one band type pair on which there is a scheduling limitation or receiving and sending cannot be performed on the first serving carrier and the first target carrier at the same time, one band type pair comprises one first band type and one second band type, and a type of a band to which the first target carrier belongs and a type of a band to which the first serving carrier belongs are comprised in one of the at least one band type pair.

10. The method according to claim 3, wherein the first information comprises a resource combination on which there is a scheduling limitation; or the first information comprises a resource combination on which receiving and sending cannot be performed on the first serving carrier and the first target carrier at the same time, wherein
the resource combination comprises a first carrier and a second band, the first carrier comprises the first serving carrier, and the second band comprises a band on which the first target carrier is located.

11. The method according to claim 3, wherein the first information comprises a resource combination on which there is a scheduling limitation; or the first information comprises a resource combination on which receiving and sending cannot be performed on the first serving carrier and the first target carrier at the same time, wherein
the resource combination comprises cell identity information and a second band, the cell identity information comprises identity information of a first serving cell, the second band comprises a band on which the first target carrier is located, and a carrier on which the first serving cell is located is the first serving carrier.

12. The method according to claim 3, wherein the first information comprises a resource combination on which there is no scheduling limitation; or the first information comprises a resource combination on which receiving and sending can be performed on the first serving carrier and the first target carrier at the same time, wherein
the resource combination comprises a first carrier and a second band, the first carrier does not comprise the first serving carrier, and the second band does not comprise a band on which the first target carrier is located.

13. The method according to claim 3, wherein the first information comprises a resource combination on which there is no scheduling limitation; or the first information comprises a resource combination on which receiving and sending can be performed on the first serving carrier and the first target carrier at the same time, wherein
the resource combination comprises cell identity information and a second band, the cell identity information does not comprise identity information of a first serving cell, the second band does not comprise a band on which the first target carrier is located, and a carrier on which the first serving cell is located is the first serving carrier.

14. The method according to claim 3, wherein the first information comprises a resource combination on which there is a scheduling limitation; or the first information comprises a resource combination on which receiving and sending cannot be performed on the first serving carrier and the first target carrier at the same time, wherein
the resource combination comprises cell identity information and a second carrier, the cell identity information comprises identity information of a first serving cell, the second carrier comprises the first target carrier, and a carrier on which the first serving cell is located is the first serving carrier.

15. The method according to claim 3, wherein the first information comprises a resource combination on which there is no scheduling limitation; or the first information comprises a resource combination on which receiving and sending can be performed on the first serving carrier and the first target carrier at the same time, wherein
the resource combination comprises cell identity information and a second carrier, the cell identity information does not comprise identity information of a first serving cell, the second carrier does not comprise the first target carrier, and a carrier on which the first serving cell is located is the first serving carrier.

16. The method according to claim 1 or 2, wherein the method further comprises:
if a type of a band to which the first target carrier belongs is a first band type, and a type of a band to which the first serving carrier belongs is a second band type, determining that there is a scheduling limitation on the first serving carrier or that receiving and sending cannot be performed on the first serving carrier and the first target carrier at the same time.

17. A communication method, wherein the method is applicable to an access network device, and comprises:
sending first configuration information to a terminal device, wherein the first configuration information is used to determine a first time domain resource used by the terminal device to measure a first target carrier; and
when there is a scheduling limitation on a first serving carrier or receiving and sending cannot be performed on the first serving carrier and the first target carrier at the same time, skipping scheduling the terminal device on the first serving carrier within reference signal measurement time configuration window duration on the first time domain resource; or
when there is a scheduling limitation on a first serving carrier or receiving and sending cannot be performed on the first serving carrier and the first target carrier at the same time, skipping scheduling the terminal device on the first serving carrier on symbols on which a measurement reference signal on the first time domain resource is located, and on a symbol previous to and a symbol next to contiguous symbols on which the measurement reference signal is located, wherein
the first target carrier and the first serving carrier belong to different bands.

18. The method according to claim 17, wherein the first time domain resource is the reference signal measurement time configuration window duration, or the first time domain resource is a measurement length ML.

19. The method according to claim 17 or 18, wherein the method further comprises:
sending first information to the access network device, wherein the first information indicates that there is a scheduling limitation on the first serving carrier; or indicates that receiving and sending cannot be performed on the first serving carrier and the first target carrier at the same time.

20. The method according to claim 19, wherein the first information comprises at least one carrier pair on which there is a scheduling limitation or receiving and sending cannot be performed on the first serving carrier and the first target carrier at the same time, wherein one carrier pair comprises one first carrier and one second carrier, and the first target carrier and the first serving carrier are comprised in one of the at least one carrier pair.

21. The method according to claim 19, wherein the first information comprises at least one carrier pair on which there is no scheduling limitation or receiving and sending can be performed on the first serving carrier and the first target carrier at the same time, wherein one carrier pair comprises one first carrier and one second carrier, and the first target carrier and the first serving carrier are not comprised in any of the at least one carrier pair.

22. The method according to claim 19, wherein the first information comprises at least one band pair on which there is a scheduling limitation or receiving and sending cannot be performed on the first serving carrier and the first target carrier at the same time, wherein one band pair comprises one first band and one second band, and a band on which the first target carrier is located and a band on which the first serving carrier is located are comprised in one of the at least one band pair.

23. The method according to claim 19, wherein the first information comprises at least one band pair on which there is no scheduling limitation, one band pair comprises one first band and one second band, and a band on which the first target carrier is located and a band on which the first serving carrier is located are not comprised in any of the at least one band pair.

24. The method according to claim 22 or 23, wherein a type of the first band and a type of the second band are respectively a frequency division duplex band and a time division duplex band; or
a type of the first band and a type of the second band are respectively a time division duplex band and a frequency division duplex band; or
the first band and the second band are different time division duplex bands.

25. The method according to claim 19, wherein the first information comprises at least one band type pair on which there is a scheduling limitation or receiving and sending cannot be performed on the first serving carrier and the first target carrier at the same time, one band type pair comprises one first band type and one second band type, and a type of a band to which the first target carrier belongs and a type of a band to which the first serving carrier belongs are comprised in one of the at least one band type pair.

26. The method according to claim 19, wherein the first information comprises a resource combination on which there is a scheduling limitation; or the first information comprises a resource combination on which receiving and sending cannot be performed on the first serving carrier and the first target carrier at the same time, wherein
the resource combination comprises a first carrier and a second band, the first carrier comprises the first serving carrier, and the second band comprises a band on which the first target carrier is located.

27. The method according to claim 19, wherein the first information comprises a resource combination on which there is a scheduling limitation; or the first information comprises a resource combination on which receiving and sending cannot be performed on the first serving carrier and the first target carrier at the same time, wherein
the resource combination comprises cell identity information and a second band, the cell identity information comprises identity information of a first serving cell, the second band comprises a band on which the first target carrier is located, and a carrier on which the first serving cell is located is the first serving carrier.

28. The method according to claim 19, wherein the first information comprises a resource combination on which there is no scheduling limitation; or the first information comprises a resource combination on which receiving and sending can be performed on the first serving carrier and the first target carrier at the same time, wherein
the resource combination comprises a first carrier and a second band, the first carrier does not comprise the first serving carrier, and the second band does not comprise a band on which the first target carrier is located.

29. The method according to claim 19, wherein the first information comprises a resource combination on which there is no scheduling limitation; or the first information comprises a resource combination on which receiving and sending can be performed on the first serving carrier and the first target carrier at the same time, wherein
the resource combination comprises cell identity information and a second band, the cell identity information does not comprise identity information of a first serving cell, the second band does not comprise a band on which the first target carrier is located, and a carrier on which the first serving cell is located is the first serving carrier.

30. The method according to claim 19, wherein the first information comprises a resource combination on which there is a scheduling limitation; or the first information comprises a resource combination on which receiving and sending cannot be performed on the first serving carrier and the first target carrier at the same time, wherein
the resource combination comprises cell identity information and a second carrier, the cell identity information comprises identity information of a first serving cell, the second carrier comprises the first target carrier, and a carrier on which the first serving cell is located is the first serving carrier.

31. The method according to claim 19, wherein the first information comprises a resource combination on which there is no scheduling limitation; or the first information comprises a resource combination on which receiving and sending can be performed on the first serving carrier and the first target carrier at the same time, wherein
the resource combination comprises cell identity information and a second carrier, the cell identity information does not comprise identity information of a first serving cell, the second carrier does not comprise the first target carrier, and a carrier on which the first serving cell is located is the first serving carrier.

32. The method according to claim 17 or 18, wherein the method further comprises:
if a type of a band to which the first target carrier belongs is a first band type, and a type of a band to which the first serving carrier belongs is a second band type, determining that there is a scheduling limitation on the first serving carrier or that receiving and sending cannot be performed on the first serving carrier and the first target carrier at the same time.

33. A communication method, wherein the method is applicable to a terminal device, and comprises:
receiving first configuration information from an access network device, wherein the first configuration information is used to determine a first time domain resource used by the terminal device to measure a first target carrier, the first time domain resource is reference signal measurement time configuration window duration, or the first time domain resource is a measurement length ML; and
when there is a scheduling limitation on a first serving carrier or receiving and sending cannot be performed on the first serving carrier and the first target carrier at the same time, skipping, by the terminal device, expecting to perform transmission on the first serving carrier within the reference signal measurement time configuration window duration on the first time domain resource; or
when there is a scheduling limitation on a first serving carrier or receiving and sending cannot be performed on the first serving carrier and the first target carrier at the same time, skipping, by the terminal device, expecting to perform transmission on the first serving carrier on symbols on which a measurement reference signal on the first time domain resource is located, and on a symbol previous to and a symbol next to contiguous symbols on which the measurement reference signal is located, wherein
the first target carrier and the first serving carrier belong to a same time division duplex band.

34. The method according to claim 33, wherein the time division duplex band comprises an intra-frequency time division duplex band and/or an inter-frequency time division duplex band.

35. A communication method, wherein the method is applicable to an access network device, and comprises:
sending first configuration information to a terminal device, wherein the first configuration information is used to determine a first time domain resource used by the terminal device to measure a first target carrier, the first time domain resource is reference signal measurement time configuration window duration, or the first time domain resource is a measurement length ML; and
when there is a scheduling limitation on a first serving carrier or receiving and sending cannot be performed on the first serving carrier and the first target carrier at the same time, skipping scheduling the terminal device on the first serving carrier within the reference signal measurement time configuration window duration on the first time domain resource; or
when there is a scheduling limitation on a first serving carrier or receiving and sending cannot be performed on the first serving carrier and the first target carrier at the same time, skipping scheduling the terminal device on the first serving carrier on symbols on which a measurement reference signal on the first time domain resource is located, and on a symbol previous to and a symbol next to contiguous symbols on which the measurement reference signal is located, wherein
the first target carrier and the first serving carrier belong to a same time division duplex band.

36. The method according to claim 35, wherein the time division duplex band comprises an intra-frequency time division duplex band and/or an inter-frequency time division duplex band.

37. A communication apparatus, comprising units configured to perform the method according to any one of claims 1 to 16, or comprising units configured to perform the method according to claim 33 or 34.

38. A communication apparatus, comprising units configured to perform the method according to any one of claims 17 to 32, or comprising units configured to perform the method according to claim 35 or 36.

39. A communication apparatus, wherein the communication apparatus is a terminal device and comprises a processor and a transceiver, and the processor and the transceiver are configured to execute a computer program or instructions stored in at least one memory, so that the apparatus implements the method according to any one of claims 1 to 16 or the method according to claim 33 or 34.

40. A communication apparatus, wherein the communication apparatus is an access network device and comprises a processor and a transceiver, and the processor and the transceiver are configured to execute a computer program or instructions stored in at least one memory, so that the apparatus implements the method according to any one of claims 17 to 32 or the method according to claim 35 or 36.

41. A computer-readable storage medium, wherein the storage medium stores a computer program or instructions, and when the computer program or the instructions are executed by a computer, the method according to any one of claims 1 to 16 or the method according to claim 33 or 34 is implemented.

42. A computer-readable storage medium, wherein the storage medium stores a computer program or instructions, and when the computer program or the instructions are executed by a computer, the method according to any one of claims 17 to 32 or the method according to claim 35 or 36 is implemented.
